(19) Europäisches Patentamt / European Patent Office / Office européen des brevets

(11) **EP 2 845 440 B1**

(12) **EUROPÄISCHE PATENTSCHRIFT**

(45) Veröffentlichungstag und Bekanntmachung des Hinweises auf die Patenterteilung:
**13.04.2016 Patentblatt 2016/15**

(21) Anmeldenummer: **13719572.3**

(22) Anmeldetag: **02.05.2013**

(51) Int Cl.:
***H05B 33/08*** (2006.01)

(86) Internationale Anmeldenummer:
**PCT/EP2013/059175**

(87) Internationale Veröffentlichungsnummer:
**WO 2013/164417 (07.11.2013 Gazette 2013/45)**

(54) **ANSTEUERUNG VON HALBLEITERLEUCHTELEMENTEN ANHAND DES ÜBERBRÜCKUNGSZUSTANDES BENACHBARTER HALBLEITERLEUCHTELEMENTEN**

CONTROLLING SEMICONDUCTOR LIGHTING ELEMENTS ON THE BASIS OF THE BYPASS STATE OF ADJACENT SEMICONDUCTOR LIGHTING ELEMENTS

COMMANDE D'ÉLÉMENTS LUMINEUX À SEMI-CONDUCTEURS SUR LA BASE DE L'ÉTAT DE PONTAGE D'ÉLÉMENTS LUMINEUX À SEMI-CONDUCTEURS VOISINS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.05.2012 DE 102012207456**

(43) Veröffentlichungstag der Anmeldung:
**11.03.2015 Patentblatt 2015/11**

(73) Patentinhaber: **OSRAM GmbH**
**80807 München (DE)**

(72) Erfinder: **RUPP, Arnulf**
**82041 Oberhaching (DE)**

(56) Entgegenhaltungen:
**DE-A1-102010 040 266 US-A1- 2012 001 558**

**Beschreibung**

Die Erfindung betrifft eine Schaltung zur Ansteuerung von Halbleiterleuchtelementen sowie eine Lampe, eine Leuchte oder ein Leuchtsystem mit einer solchen Schaltung.

Es ist bekannt, ein LED-Modul umfassend mehrere Leuchtdioden mittels eines einstufigen oder eines mehrstufigen Schaltnetzteils, das dem LED-Modul vorgeschaltet ist, zu betreiben. Weist das LED-Modul einen Leistungsbereich größer 25W auf, wird zusätzlich eine Powerfaktorkorrektur (PFC) benötigt. Bei geringen elektrischen Leistungen wird üblicherweise ein Linearregler eingesetzt.

Oberhalb bestimmter Licht- bzw. Leistungsklassen, bei denen z.B. eine Vielzahl von LEDs in einem Modul oder in mehreren LED-Modulen betrieben werden sollen, sind Schaltungsanordnungen bekannt, bei denen viele LED-Chips in Serie geschaltet sind. Die Vorwärtsspannung dieser Serienschaltung kann dabei in der Größenordnung der Netzspannung liegen.

In einer einfachen Ausführungsform werden in Reihe geschaltete LEDs direkt an dem Wechselspannungsnetz betrieben. Dies führt zu einer starken Lichtmodulation, einem sogenannten "Flickern", und einer energieineffizienten Nutzung der LEDs. Für höhere Leistungsklassen führt dieser Ansatz weiterhin zu Problemen mit normativen Vorgaben in Bezug auf Powerfaktor und Oberwellen.

Weiterhin ist bekannt, der Serienschaltung aus LEDs einen Gleichrichter vorzuschalten. Auch hier kommt es zu den vorstehend genannten Problemen.

Ferner ist bekannt, die Verschaltung der LED-Serienschaltung zeitsynchron mit der Netzspannungsmodulation zu verändern.

So zeigt DE 10 2010 040 266 A1 eine LED-Leuchte mit einer integrierten Schaltung, einem Gleichrichter und einer Reihe von in Reihe geschalteten LEDs, die über ein gleichgerichtetes AC-Signal betrieben werden. Die integrierte Schaltung weist Leistungsschalter auf, die eine entsprechende Gruppe von verschiedenen Gruppen von LEDs in einer LED-Reihe, über welcher das gleichgerichtete AC-Signal anliegt, einzeln und gezielt kurzschließen können. Wenn die Spannung über der Reihe zunimmt, steuert die integrierte Schaltung die Leistungsschalter, um die Anzahl von LEDs, durch die Strom fließt, zu erhöhen, während die integrierte Schaltung die Leistungsschalter dann, wenn die Spannung über der Folge abnimmt, steuert, um die Anzahl von LEDs, durch die Strom fließt, zu verringern.

Die Schrift WO 2012/034102A1 beschreibt ein System zum Ansteuern von LEDs direkt aus einer gleichgerichteten Netzspannung mit Hilfe von Schaltern, die abhängig von der momentanen Netzspannung Gruppen von LEDs überbrücken.

Die **Aufgabe** der Erfindung besteht darin, die bekannte Lösung zu verbessern und eine effiziente Möglichkeit zur Ansteuerung von Halbleiterleuchtelementen anzugeben.

Diese Aufgabe wird gemäß den Merkmalen der unabhängigen Patentansprüche gelöst. Weiterbildungen der Erfindung ergeben sich auch aus den abhängigen Ansprüchen.

Zur Lösung der Aufgabe wird eine Schaltung zur Ansteuerung von Halbleiterleuchtelementen vorgeschlagen, wobei die Schaltung von einer gleichgerichteten Netzspannung versorgt wird, mit mindestens zwei in Reihe geschalteten Segmenten, die jeweils ein oder mehrere in Reihe geschaltete Halbleiterleuchtelemente aufweisen, wobei die Halbleiterleuchtelemente in zumindest zwei der Segmente unterschiedlich sind, wodurch sich unterschiedliche Vorwärtsspannungen der Segmente ergeben, mit je einem Treiber zur Ansteuerung eines Segments, wobei der Treiber mindestens einen elektronischen Schalter aufweist, anhand dessen das Segment überbrückbar ist, wobei die Schaltungsanordnung oder jeder Treiber eingerichtet ist, anhand eines Momentanwertes der gleichgerichteten Netzspannung sowie anhand des Überbrückungszustandes der benachbarten Segmente zu entscheiden, das ihm zugeordnete Segment zu überbrücken. Diese Maßnahme stellt eine optimierte Ansteuerung Der Halbleiterleuchelemente sicher, wobei zur Ansteuerung nicht einmal die gleichgerichtete Netzspannung explizit gemessen werden muss. Die Entscheidung, das zugeordnete Segment zu überbrücken ergibt sich allein aus dem Schaltzustand der restlichen Segmente und einer Referenzspannung. Eine Weiterbildung ist es, dass das Segment mit der geringeren Vorwärtsspannung innerhalb der Reihenschaltung näher an einem Bezugspunkt der Schaltung angeordnet ist. Dies hat den Vorteil, dass sich das optimale Ansteuerverfahren aufgrund des stetig steigenden oder fallenden Momentanwertes der Netzspannung ganz von allein ergibt.

Bevorzugt weist jeder Treiber einen Spitzenwertdetektor auf, der die aktuelle Vorwärtsspannung des Segmentes speichert. Dadurch ergibt sich eine erleichterte Entscheidungserkennung für den jeweiligen Treiber. Wenn jeder Treiber einen Fußpunkt aufweist, dessen Potential vom im Spitzenwertdetektor gespeicherten Wert der Vorwärtsspannung des Segmentes abhängt, kann die Überbrückungsentscheidung auf besonders einfache Weise realisiert werden. Alternativ kann die Vorwärtsspannung auch durch eine Referenzspannung als Vergleichswert vorgehalten werden oder z.B. in einer Wertetabelle einer Mikrokontrollers gespeichert sein.

Bevorzugt umfasst der Treiber dabei ein Vergleichselement, wodurch jeder Treiber das ihm zugeordnete Segment immer dann umschaltet, wenn die Potentialdifferenz zwischen Fußpunkt und einer in den Treiber eingegebenen Schwellenspannung ihr Vorzeichen ändert. Diese einfache Vergleichsoperation ist ausreichend, um die Halbleiterleuchtelemente optimal zu betreiben.

Eine Weiterbildung ist es, wenn jedem Treiber eine individuelle Schwellenspannung zugeordnet ist. Damit kann die Betriebsweise der Halbleiterleuchtelemente so geschehen, dass alle Halbleiterleuchtelemente im Mittel über der Zeit mit der gleichen elektrischen Leistung betrieben werden.

In einer weiteren Ausgestaltung ergeben die Summen aller möglichen Kombinationen der Vorwärtsspannungen von Teilmengen aller Segmente und die Vorwärtsspannungen der einzelnen Segmente stets unterschiedliche Werte. Dies begünstigt eine optimierte Ansteuerung der Halbleiterleuchtelemente.

In einer Weiterbildung dieser Ausgestaltung verdoppeln sich die Flussspannungen der in Reihe geschalteten Segmente ausgehend vom Segment mit dem geringsten Potential bezogen auf den Bezugspunkt jeweils. Diese Anordnung kann durch eine erfindungsgemäße Ansteuerung besonders Vorteilhaft für die Ansteuerung aller Halbleiterlichtquellen sein, und realisiert einen äquidistanten Abstand der kombinatorisch realisierbaren Vorwärtsspannungen.

In einer weiteren Ausführungsform bewirkt ein Umschalten eines Segmentes, welches gegenüber dem Bezugspunkt eine größere Potentialdifferenz aufweist, ein Umschalten mindestens eines Segmentes, welches gegenüber dem Bezugspunkt eine kleinere Potentialdifferenz aufweist. Diese Ausgestaltung ermöglicht ein binärzählerartiges Schaltschema, welches im Zusammenspiel mit der binären Anordnung der Kettenlängen der Halbleiterleuchtelemente eine besonders optimale Betriebsweise ermöglicht. Insbesondere bewirkt ein Überbrücken eines Segmentes, welches gegenüber dem Bezugspunkt eine größere Potentialdifferenz aufweist, ein Freischalten des benachbarten Segmentes, welches gegenüber dem Bezugspunkt eine kleinere Potentialdifferenz aufweist, und umgekehrt.

In einer weiteren Ausgestaltung sind die Segmente mit einem Stromregler in Reihe geschaltet. Dadurch können die Spannungssprünge beim Überbrücken einzelner Ketten gut ausgeglichen werden, und es gibt keine Stromsprünge, die letztlich die Lebensdauer der Leuchtelemente beeinträchtigen würden. Insbesondere weist der Stromregler ein resistives Element oder einen Linearregler auf.

Eine weitere Ausgestaltung ist es, wenn der elektronische Schalter des Treibers mit der größten Potentialdifferenz zum Bezugspunkt mit einer Schalthäufigkeit aktiv ist, die der doppelten Netzfrequenz entspricht, und bei der die elektronischen Schalter der übrigen Stufen mit einer Schalthäufigkeit aktiv sind, die ein Vielfaches der doppelten Netzfrequenz ist. Dies begünstigt eine möglichst geringe Varianz der mittleren Leuchtdauer der Halbleiterleuchtelemente.

Eine weitere Ausgestaltung ist es, wenn parallel zu Halbleiterleuchtelementen mindestens eines Segments ein Pufferkondensator geschaltet ist, wobei in Reihe zu dem mindestens einen Segment eine Entkoppeldiode angeordnet ist, und der elektronische Schalter parallel zu der Reihenschaltung aus Segment und Entkoppeldiode angeordnet ist, so dass die Entkoppeldiode die Entladung des Pufferkondensators über den elektronischen Schalter verhindert. Der Pufferkondensator bewirkt eine längere Leuchtdauer der angeschlossenen Kette aus Halbleiterleuchtelementen, wodurch eine bessere Lichtqualität mit weniger Flackeranteil entsteht. Alternativ kann mindestens einer der Treiber eine Reihenschaltung aus einem Kondensator und einer Diode aufweisen, wobei diese Reihenschaltung parallel zu den Halbleiterleuchtelementen des Segments angeordnet ist, das der Treiber ansteuert. Dieser Kondensator wirkt als Spitzenwertdetektor, indem er die aktuelle Flussspannung der parallelgeschalteten Kette speichert.

einer weiteren Ausgestaltung umfasst der Treiber einen elektronischen Kurschluss-Schalter, anhand dessen das dem Treiber zugeordnete Segment kurzschließbar ist, wobei der Basis-Anschluss des Kurzschluss-Schalters über ein erstes strombegrenzendes Element mit dem Kollektor-Anschluss eines elektronischen Vergleichs-Schalters verbunden ist, wobei der Emitter-Anschluss des Vergleichs-Schalters mit einem Anschluss des Segments, dem der Treiber zugeordnet ist, verbunden ist, wobei der Basis-Anschluss des Vergleichs-Schalters mit einem Pol der gleichgerichteten Netzwechselspannung verbunden ist. Durch diese Maßnahme kann eine besonders einfache und kostengünstige Schaltung aufgebaut werden, die die angeschlossenen Halbleiterleuchtelemente trotzdem optimal betreibt.

Bei dem Treiber kann es sich um eine Schaltungsanordnung handeln, die zur Ansteuerung eines Segments einsetzbar ist.

Die Treiber werden somit von einer gleichgerichteten Netzspannung in Form einer pulsierenden Gleichspannung betrieben. Hierbei ist es von Vorteil, dass die Gleichrichtung der Netzwechselspannung keine Speicher, z.B. einen Kondensator, vorsehen muss. Insbesondere muss kein glättender Elektrolytkondensator vorgesehen sein, der für die gesamte Höhe der Netzspannung ausgelegt ist. Dies reduziert die Fehleranfälligkeit und ermöglicht eine kompaktere Bauweise der Schaltung.

Mittels des elektronischen Schalters ist eine Schaltfunktion elektronisch ansteuerbar. Der elektronische Schalter kann einen Transistor, einen Mosfet einen Operationsverstärker, einen Komparator oder ein mit einer Schaltfunktion beaufschlagbares Bauteil umfassen.

Bei den Halbleiterleuchtelementen handelt es sich beispielsweise um LEDs, LED-Chips oder LED-Module. Auch kann ein Halbleiterleuchtelement mindestens eine OLED (organische Leuchtdiode) oder ein Modul mit mindestens einer OLED umfassen.

Ein Vorteil des Pufferkondensators, besteht darin, dass der Pufferkondensator entsprechend für eine geringere Spannung als die (gleichgerichtete) Netzspannung ausgelegt sein kann. Damit weist der Pufferkondensator eine kleinere Bauform auf und unterliegt einer geringeren Belastung. Beispielsweise kann der Pufferkondensator für die Höhe der an dem Segment abfallenden Spannung ausgelegt sein, die aufgrund der Reihenschaltung der Segmente deutlich geringer ist als die Netzspannung bzw. die Spannung, die an allen Segmenten abfällt.

Insbesondere kann der Pufferkondensator auch nur zu einem Teil der Halbleiterleuchtelemente des Segments parallel angeordnet sein.

Eine Ausführungsform besteht darin, dass der Pufferkondensator in oder zusammen mit demjenigen Treiber angeordnet ist, der das Segment mit der größten Vorwärtsspannung ansteuert.

Auch kann in mehreren Treibern je ein solcher Pufferkondensator angeordnet sein, wobei es sich vorzugsweise um diejenigen Treiber handelt, die die Segmente aus den mehreren Segmenten ansteuern, deren Halbleiterleuchtelemente die größten Vorwärtsspannungen aufweisen.

Eine nächste Ausgestaltung ist es, dass der Pufferkondensator über eine lösbare Verbindung austauschbar ausgeführt ist.

Insbesondere kann dieser Pufferkondensator über die lösbare Verbindung an einem anderen Ort als die Schaltung angeordnet sein. So kann der Pufferkondensator über die lösbare Verbindung einfach ausgetauscht werden. Eine weitere Ausgestaltung ist es, wenn eine Entkoppeldiode zwischen je zwei Segmenten angeordnet ist, wobei der elektronische Schalter parallel zu der Reihenschaltung aus Segment und Entkoppeldiode angeordnet ist. Die Entkoppeldiode verhindert somit die Entladung des Pufferkondensators über den elektronischen Schalter.

Auch ist es eine Ausgestaltung, dass mindestens einer der Treiber eine Reihenschaltung aus einem Kondensator und einer Diode aufweist, wobei diese Reihenschaltung parallel zu den Halbleiterleuchtelementen des Segments angeordnet ist, welches der Treiber ansteuert.

Bei der Serienschaltung aus Kondensator und Diode handelt es sich um einen Spitzenwertdetektor für das jeweilige Segment.

Eine Weiterbildung besteht darin, dass die Treiber über mindestens eine Spannungsquelle mit der gleichgerichteten Netzspannung gekoppelt sind.

Eine zusätzliche Ausgestaltung ist es, dass jeder Treiber über eine separate Spannungsquelle mit der gleichgerichteten Netzspannung gekoppelt ist.

Eine Weiterbildung ist es, dass die mindestens eine Spannungsquelle realisierbar ist mittels:

- eines Spannungsteilers;
- einer Hilfsspannungsquelle;
- einer Zenerdiode.

Auch ist es eine Möglichkeit, dass die Spannungsquelle ansteuerbar ist abhängig von einem Mittelwert der gleichgerichteten Netzspannung.

So kann anhand der (steuerbaren) Spannungsquelle eine Beziehung zu der mittleren Netzspannung hergestellt werden. Anhand der Spannungsquellen für die mehreren Treiber ist es möglich, die Ströme für die Halbleiterleuchtelemente der Segmente zu steuern, zum Beispiel zu symmetrisieren.

Beispielsweise kann eine längerfristige Mittelung über eine Netzperiode oder über mehrere Netzperioden der Netzspannung erfolgen. Die (längerfristige) Mittelung kann abhängig von einem Spitzenwert, einem Mittelwert o.ä. erfolgen. Dabei kann die Netzspannung bereits gleichgerichtet sein oder es kann sich um eine Netzwechselspannung handeln.

Eine andere Weiterbildung ist es, dass die Treiber mit einer gleichgerichteten Netzspannung versorgbar sind.

Eine Weiterbildung ist es, dass mindestens zwei der Segmente Halbleiterleuchtelemente aufweisen, die zumindest teilweise in ihren Vorwärtsspannungen, ihren Farben, ihren Größen, ihren Bauformen und/oder ihren Anzahlen unterschiedlich sind. Bevorzugt sind die Vorwärtsspannungen aller Segmente unterschiedlich.

Eine andere Weiterbildung ist es, dass der Treiber ein Vergleichselement umfasst.

Das Vergleichselement kann z.B. ein Komparator sein oder einen solchen umfassen. Das Vergleichselement kann als (mindestens) ein Operationsverstärker oder als mindestens ein Transistor ausgeführt sein.

Das Vergleichselement vergleicht ein erstes Bezugspotential, z.B. eine Seite der gleichgerichteten Netzspannung, mit einem zweiten Bezugspotential, z.B. einem Potential am Ende oder in dem jeweiligen Segment.

Anhand des Stromreglers kann der Strom in den Segmenten vorgegeben sein. An dem Stromregler kann eine vorgegebene Spannung abfallen, z.B. diejenige Spannung, die nicht an den in Reihe geschalteten Halbleiterleuchtelementen abfällt.

Der Stromregler kann selbst einen Strom einstellen oder er kann genutzt werden, damit ein Strom eingestellt wird.

Auch ist es eine Weiterbildung, dass der Stromregler mittels einer Dimmung steuerbar ist.

Eine Option besteht darin, dass der Stromregler gesteuert wird und damit eine Helligkeitsregelung (Dimmung) der Halbleiterleuchtelemente erreicht werden kann. Die Ansteuerung kann auf unterschiedliche Arten erfolgen, z.B. über ein Potentiometer, eine DALI-System, einen Mikrocontroller oder eine 1-10V-Schnittstelle.

Im Rahmen einer zusätzlichen Weiterbildung weist das Segment mit der größten Vorwärtsspannung eine mindestens doppelt so große Vorwärtsspannung auf wie das Segment mit der geringsten Vorwärtsspannung.

Beispielsweise kann das Segment mit der größten Vorwärtsspannung eine um mindestens 60% größere Vorwärtsspannung aufweisen wie das Segment mit der zweitgrößten Vorwärtsspannung.

Eine nächste Weiterbildung besteht darin, dass der elektronische Schalter des Treibers mit einer Schaltfrequenz beziehungsweise Schalthäufigkeit aktiv ist, die mindestens die doppelte Netzfrequenz oder ein Vielfaches der Netzfrequenz aufweist.

Unter Schaltfreuenz oder Schalthäufigkeit wird im folgenden die mittlere Frequenz des Ein- und Ausschaltens des Schalters verstanden. Ein Ein- und darauffolgendes Ausschalten ergibt dabei eine Vollwelle. Dabei können die Einschaltdauer und die Ausschaltdauer unterschiedlich lange sein, die Schalthäufigkeit ergibt sich aus der mittleren Frequenz des Ein- und Ausschaltens des Schalters.

Insbesondere kann der Schalter desjenigen Treibers, der das Segment mit der größten Vorwärtsspannung ansteuert, mit einer Schaltfrequenz von mindestens 100Hz betrieben werden.

Auch ist es eine weitere Ausgestaltung, dass eine Einrichtung zur Mischung des von mehreren Segmenten bereitgestellten Lichts vorgesehen ist.

Beispielsweise kann eine Optik vorgesehen sein, anhand derer emittiertes Licht mehrere Halbleiterleuchtelemente gemischt wird.

Beispielsweise handelt es sich bei dem Kurzschluss-Schalter um einen pnp-Transistor und bei dem Vergleichs-Schalter um einen npn-Transistor. Entsprechend können in einer dazu dualen Ausführungsform auch pnp- und npn-Transistoren vertauscht ausgeführt sein mit entsprechender Potentialanpassung. Als Schalter können auch andere elektronische Schalter, z.B. IGBTs, Mosfets, o.ä. vorgesehen sein.

An der Basis-Emitter-Strecke des Vergleichs-Schalters erfolgt ein Vergleich des Potentials an dem jeweiligen Segment (z.B. einem Vergleichspunkt innerhalb der LED-Kette) mit dem Potential der aktuellen gleichgerichteten Netzhalbwelle. Entsprechend kann eine Ansteuerung des jeweiligen Segments durch den Treiber abhängig von der Höhe der gleichgerichteten Netzwechselspannung erfolgen.

Optional kann der Basis-Anschluss des Vergleichs-Schalters mit einem Pol einer Spannungsquelle verbunden sein, die eine Offset-Spannung gegenüber dem Potential der gleichgerichteten Netzwechselspannung darstellt.

Die vorstehend genannte Aufgabe wird auch gelöst durch eine Lampe, eine Leuchte oder ein Leuchtsystem mit einer Schaltung wie hierin beschrieben.

Bei der Lampe, Leuchte oder bei dem Leuchtsystem kann es sich um eine LED-Lichtquelle handeln.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung von Ausführungsbeispielen, die im Zusammenhang mit den Zeichnungen näher erläutert werden. Dabei können zur Übersichtlichkeit gleiche oder gleichwirkende Elemente mit gleichen Bezugszeichen versehen sein.

Es zeigen:

Fig.1      zur Erläuterung des technischen Gebiets, eine schematischen Schaltungsanordnung zur Ansteuerung dreier LED-Segmente, wobei die einzelnen LED-Segmente unterschiedliche Anzahl von LEDs aufweisen und die LED-Segmente jeweils mittels eines parallel angeordneten elektronischen Schalters überbrückt bzw. kurzgeschlossen werden können;

Fig.2      eine schematische Schaltung zur Ansteuerung dreier LED-Segmente, wobei die LED-Segmente unterschiedlich viele LEDs aufweisen, wobei zwischen einzelnen LEDs teilweise eine Entkoppeldiode und parallel zu einer Auswahl der LED-Segmente ein Kondensator angeordnet ist;

Fig.3      eine schematische Schaltungsanordnung zur Ansteuerung mehrerer elektronischer Schalter mittels Komparatoren;

Fig.4      basierend auf der Darstellung von Fig.3 mehrere Spannungsquellen zur Symmetrisierung der Ströme zwischen einzelnen LED-Segmenten;

Fig.5      zur Erläuterung von Merkmalen aus den Unteransprüchen, eine alternative schematische Schaltungsanordnung zur Ansteuerung mehrerer elektronischer Schalter mittels diskreter Bauelemente;

Fig.6      eine detaillierte Darstellung der in Fig.5 gezeigten Module 522a bis 522d;

Fig.7      eine alternative Schaltungsanordnung zu Fig.5;

Fig.8      eine alternative Schaltungsanordnung, die im Wesentlichen auf der Schaltung gemäß Fig.7 basiert und mehrere Spannungsquellen vorsieht, die zur Ansteuerung bzw. Symmetrisierung der einzelnen LED-Segmente einsetzbar sind;

Fig.9a    die einzelnen Spannungsverläufe, jeweils zwei pro LED-Segment, unter der gleichgerichteten Netzspannung über der Zeit;

Fig.9b    die Stromverläufe über der Zeit für die LED-Segmente;

Fig.10a    eine alternative Schaltungsanordnung zu Fig.7 mit den Zeigern für die Spannungen aus Fig. 9a und Ströme aus Fig.9b sowie mit den pro Phase unterschiedlichen Stromverläufen;

Fig.10b    der Stromverlauf der Schaltung aus Fig. 10a in Phase 0;

Fig.10c    der Stromverlauf der Schaltung aus Fig. 10a in Phase Eins;

Fig.10d    der Stromverlauf der Schaltung aus Fig. 10a in Phase Zwei;

Fig.10e    der Stromverlauf der Schaltung aus Fig. 10a in Phase Drei;

Fig.10f    der Stromverlauf der Schaltung aus Fig. 10a in Phase Vier;

Fig.10g    der Stromverlauf der Schaltung aus Fig. 10a in Phase Fünf;

Fig.10h    der Stromverlauf der Schaltung aus Fig. 10a in Phase Sechs;

Fig.10i    der Stromverlauf der Schaltung aus Fig. 10a in Phase Sieben;

Betrieb einer LED-Kette an einer Netzspannung

Eine LED-Kette umfasst mehrere Segmente (LED-Segmente), die miteinander in Reihe geschaltet sind. Zwischen den LED-Segmenten können ggf. weitere Bauteile angeordnet sein. Jedes LED-Segment kann eine Vielzahl von LEDs aufweisen, die miteinander in Reihe geschaltet sind.

Eine Netzspannung bezeichnet eine Wechselspannung wie sie z.B. von einem elektrischen Versorgungsnetz bereitgestellt wird. Die Netzspannung kann über einen Gleichrichter in gleichgerichtete Netzspannungshalbwellen (auch bezeichnet als "Halbwellen" oder "pulsierende Netzspannung") umgewandelt werden. Der Gleichrichter kann als ein Einweg- oder ein Zweiweg-Gleichrichter ausgeführt sein.

Zur Ansteuerung der in Reihe geschalteten LED-Segmente werden kombinatorische Möglichkeiten der den LED-Segmenten entsprechende Vorwärtsspannungen ausgenutzt. Entsprechend der Anzahl der in einem Segment in Reihe geschalteten LEDs ergibt sich eine Vorwärtsspannung. Durch unterschiedliche Anzahlen von in Reihe geschalteten LEDs ergeben sich unterschiedliche Vorwärtsspannungen für unterschiedliche LED-Segmente. Die Anzahl der LED-Segmente wird nachfolgend mit M bezeichnet.

Hierbei sei angemerkt, dass unterschiedliche LEDs gleichen oder unterschiedlichen Typs (z.B. unterschiedliche LED-Module und/oder LEDs mit unterschiedlichen Farben) in Reihe geschaltet sein können. Es ist auch möglich, dass einzelne LEDs eine Parallelschaltung mindestens eines Halbleiterleuchtelements umfassen.

Parallel zu mindestens einem LED-Segment, insbesondere parallel zu mehreren LED-Segmenten, können elektronische Schalter vorgesehen sein, die einzelne oder mehrere LED-Segmente kurzschließen. Durch Ansteuerung der elektronischen Schalter kann erreicht werden, dass die Spannung an den LED-Segmenten $U_{LED}(t)$ der gleichgerichteten Netzspannung $U_{in}(t)$ (d.h. den oben genannten Halbwellen) folgt (bzw. nachgeführt wird):

$$U_{LED}(t) = U_{LED}(t_i, I) = U_i(I),$$

wobei $U_i(I)$ eine Gesamtspannung der nicht überbrückten LEDs für den Schaltzustand i bei einem Strom I ist.

Hierbei sind vorzugsweise die LED-Segmente unterschiedlich ausgeführt, d.h. weisen zumindest teilweise zueinander unterschiedliche Vorwärtsspannungen auf. Insbesondere weisen zumindest zwei der LED-Segmente unterschiedliche Anzahlen und/oder Typen von LEDs auf. Mit anderen Worten sind nicht alle LED-Segmente mit gleicher Anzahl LEDs gleichen Typs in gleicher Verschaltung bestückt. Damit werden die einzelnen LED-Segmente zu unterschiedlichen Zeitpunkten (während des Verlaufs der gleichgerichteten Netzspannung) und ggf. auch unterschiedlich häufig pro Netzperiode aktiviert bzw. deaktiviert, d.h. mit einer unterschiedlichen Frequenz betrieben.

Es können zur Ansteuerung der Schalter (zur Überbrückung der LED-Segmente) auch Frequenzen verwendet werden, die höher als die Netzfrequenz sind. Dadurch gibt es eine Vielzahl kombinierbarer Schaltzustände, um die unterschiedlichen Schalter anzusteuern. Die Anzahl der möglichen Schaltzustände N ist damit wesentlich größer ($2^M$) als die Anzahl der LED-Segmente M.

Die nachfolgende tabellarische Aufstellung zeigt beispielhaft Kombinationsmöglichkeiten bei einer Anordnung mit drei LED-Segmenten, wobei

| | |
|---|---|
| i | den Schaltzustand, |
| $SW_m$ | mit m=1 bis 3 den Schalter, |
| 0 | einen offenen Schalter, |
| 1 | einen geschlossenen Schalter |
| $U_{f1}(I)$ bis $U_{f3}(I)$ | eine Vorwärtsspannung der nicht überbrückten LEDs bei dem Strom I für das LED-Segment 1 bis 3. |

bezeichnen.

| i | $SW_1$ | $SW_2$ | $SW_3$ | $U_i(I)$ |
|---|---|---|---|---|
| 1 | 1 | 1 | 1 | |
| 2 | 0 | 1 | 1 | $U_{f1}(I)$ |
| 3 | 1 | 0 | 1 | $U_{f2}(I)$ |
| 4 | 0 | 0 | 1 | $U_{f1}(I) + U_{f2}(I)$ |
| 5 | 1 | 1 | 0 | $U_{f3}(I)$ |
| 6 | 0 | 1 | 0 | $U_{f1}(I) + U_{f3}(I)$ |
| 7 | 1 | 0 | 0 | $U_{f2}(I) + U_{f3}(I)$ |
| 8 | 0 | 0 | 0 | $U_{f1}(I) + U_{f2}(I) + U_{f3}(I)$ |

Die Restspannung

$$U_{in}(t) - U_{LED}(t)$$

fällt an einem Stromregler ab. Mit einer Mehrzahl von LED-Segmenten mit unterschiedlich (vielen) in Reihe geschalteten LEDs lassen sich ein Vielzahl verschiedener Gesamt-Vorwärtsspannungen für die LED-Kette realisieren, so dass diese Gesamtspannung der aktuellen Netzspannung sehr nahe kommt. Die Restspannung ist damit im Vergleich zur Netzspannung klein.

Aufgrund dieser geringen Restspannung kann der Stromregler beispielsweise als ein einfacher und kostengünstig zu realisierender Linearregler ausgeführt sein. Der Stromregler kann auch so ausgelegt sein, dass der Strom (nahezu) ideal der Netzspannung folgt, so dass ein Powerfaktor der Schaltung nahe 1,0 ist und keine (nennenswerten) Oberwellen auftreten.

Im Extremfall kann der Stromregler sogar entfallen, z.B. wenn die Dynamik der LED Kennlinie bei einer begrenzen Strommodulation ausreicht um die Abstände zwischen den Schaltstufen zu füllen.

Ein mögliche Dimensionierung der LED-Segmente besteht darin, dass ein erstes LED-Segment eine Anzahl A in Reihe geschalteter LEDs aufweist, ein anderes (nächstes) LED-Segment eine Anzahl A/2, ein weiteres LED-Segment eine Anzahl A/4, etc. Kennzeichnet z.B. ein Index m ein LED-Segment, so kann diese Beziehung dargestellt werden mit

$$A_m = A_{m+1} / 2$$

wobei m=1...M die unterschiedlichen M LED-Segmente kennzeichnet.

Wird vereinfachend angenommen, dass die LED-Spannung $U_i(I)$ stromunabhängig ist, d.h.

$$U_i(I) \sim U_i(I_{Nenn}),$$

dann führt diese Auslegung zu äquidistanten Spannungswerten. Diese Anordnung ist günstig, aber nicht zwingend optimal, da die Dichte der Schaltzustände im Strommaximum für die Verlustleistung eine größere Rolle spielt als im Bereich der Stromnulldurchgänge.

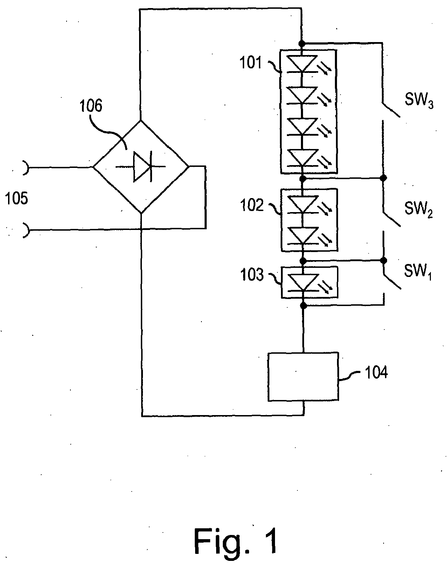

**Fig.1** veranschaulicht den vorstehend beschriebenen Zusammenhang anhand einer schematischen Schaltungsanordnung zur Ansteuerung dreier LED-Segmente 101, 102 und 103, wobei das LED-Segment 101 eine Reihenschaltung aus vier LEDs, das LED-Segment 102 eine Reihenschaltung aus zwei LEDs und das LED-Segment 103 eine einzelne LED aufweist. Das LED-Segment 101 ist mit einem parallel dazu angeordneten Schalter $SW_3$ überbrückbar, das LED-Segment 102 ist mit einem parallel dazu angeordneten Schalter $SW_2$ überbrückbar und das LED-Segment 103 ist mit einem parallel dazu angeordneten Schalter $SW_1$ überbrückbar. Die Schalter $SW_1$ bis $SW_3$ sind als elektronische Schalter, z.B. Transistoren oder Feldeffekttransistoren ausgeführt, die von einer Steuereinheit (nicht in Fig.1 dargestellt) angesteuert werden.

Die LED-Segmente 101 bis 103 sind miteinander und mit einem Stromregler 104 in Reihe geschaltet. Bei dem Stromregler 104 kann es sich um ein resistives Element, insbesondere um einen Linearregler, handeln. Alternativ ist es auch möglich, dass der Stromregler 104 ein aktiver Stromregler ist.

Eine Option besteht darin, dass der Stromregler gesteuert wird und damit eine Helligkeitsregelung (Dimmung) der Leuchtdioden erreicht werden kann. Die Ansteuerung kann auf unterschiedliche Arten, z.B. ein Potentiometer, eine DALI-System oder eine 1-10V-Schnittstelle erfolgen.

Eine Netzwechselspannung 105, z.B. 230VAC, wird über einen Gleichrichter 106 in eine pulsierende Netzspannung umgewandelt und mit der Serienschaltung, umfassend die LED-Segmente 101 bis 103 sowie den Stromregler 104, verbunden. In der Serienschaltung fließt ein zeitlich variierender Strom I(t). An dem LED-Segment 101 fällt die Vorwärtsspannung $U_{f3}$, an dem Segment 102 die Vorwärtsspannung $U_{f2}$ und an dem LED-Segment 103 die Vorwärtsspannung $U_{f1}$ ab, falls das jeweilige LED-Segment nicht mittels des zugeordneten parallelen Schalters $SW_1$ bis $SW_3$ überbrückt wird.

Nebenbedingungen zur Optimierung der Schaltvorgänge

Beispielsweise kann die Anzahl der LEDs pro Segment als eine erste Größe und die Schaltfrequenz der elektronischen Schalter zur Überbrückung der LED-Segmente als eine zweite Größe bestimmt werden bzw. vorgegeben sein. Diese beiden Größen können mittels zwei oder drei der nachfolgend erläuterten Nebenbedingungen optimiert werden. Vorzugsweise sind die Nebenbedingungen für den ganzen Betriebsspannungsbereich oder zumindest für einen großen Teil des Betriebsspannungsbereichs erfüllt.

Die ersten beiden Nebenbedingungen (A) und (B) lauten:

(A) Ein unterbrechungsfreier Stromfluss (ohne Oberwellen) wird erreicht, wenn

$$U_{in}(t) - U_{LED}(t) >= U_P(t) \qquad\qquad (1)$$

erfüllt ist, wobei $U_P$ die Summe parasitärer Spannungsabfälle in Gleichrichterdioden, Schaltern, etc. bezeichnet.

(B) Eine Minimierung der Verlustleistung wird erreicht, wenn

$$INT\ (0..T)\ [\ (U_{in}(t) - U_{LED}(t))\ *\ I(t)\ ] => minimal$$
$$(2)$$

erfüllt ist, wobei

INT (0...T) [ ... ]   einem Integral über eine Netzperiode

entspricht.

Eine weitere Optimierungsbedingung (C) kommt hinzu, wenn das Verhältnis der mittleren Ströme in den verschiedenen LED-Segmenten von Bedeutung ist, also z.B. die Stromdichte in allen LEDs gleich sein soll. Dies gilt insbesondere, wenn dieses Verhältnis der mittleren Ströme über den gesamten Betriebsspannungsbereich eingehalten werden soll.

(C) Ein gewünschtes Verhältnis zwischen den Strömen in den LED-Segmenten wird erreicht, wenn

$$\text{INT} (0..T) [ I(t) * SW_m(t) ] / (I_{Soll,m} * T) = 1 \quad \text{für alle m} \quad (3)$$

erfüllt ist, wobei

$SW_m(t)$     einen Schaltrhythmus (0: Schalter ist geschlossen, 1: Schalter ist offen) für das Segment m zur Zeit t und
$I_{soll,m}$     einen gewünschte Strom für das LED-Segment m

bezeichnen.

Eine Alternative zu der Nebenbedingung (C) wäre es, wenn das Licht aller LED-Segmente so gemischt würde, dass Helligkeitsunterschiede keine (deutliche bzw. wahrnehmbare) Rolle spielen. In diesem Fall kann die Nebenbedingung (C) entfallen.
Auch ist es möglich, die LED-Chipgrößen und die Abstände zwischen den Chips in den LED-Segmenten unterschiedlich auszulegen, so dass die Stromdichten in den LED-Segmenten dem mittleren Strom des jeweiligen LED-Segments angepasst sind.
Die Nebenbedingung (C) ist insbesondere dann von Vorteil, wenn in den LED-Segmenten verschiedene Typen bzw. Sorten (z.B. Farben) von LEDs enthalten sind und die Ansteuerung der Schalter (Schaltrhythmus pro Segment i) verwendet wird, die Leistung bedarfsgerecht zu verteilen. Mögliche Anwendungen stellen eine elektronische Kalibrierung des Farbortes, ein Nachführen eines Weißpunktes über die Lebensdauer und Module mit einem einstellbaren Weißpunkt dar.
Beispielhaft wird nachfolgend zur übersichtlichen Darstellung davon ausgegangen, dass die Schaltstufen i für einen bestimmten Strom I nach der LED Spannung $U_i(I)$ aufsteigend sortiert sind.

Lösungsstrategie für die Nebenbedingungen (A) und (B)

Die Nebenbedingungen (A) und (B) werden dann optimal erfüllt, wenn

- im 1. und 3. Quadranten der Netzspannung, also bei steigender Netzspannung, der Wechsel vom Schaltzustand i zum nächsten Schaltzustand i+1 dann erfolgt, wenn die Nebenbedingung (A) für den Schaltzustand i+1 gerade erfüllt wird und
- im 2. und 4. Quadranten der Netzspannung, also bei sinkender Netzspannung, der Wechsel vom Schaltzustand i zum nächsten Schaltzustand i-1 genau dann erfolgt wenn die Nebenbedingung (A) für den Schaltzustand i gerade nicht mehr erfüllt wird.

Dieses Schaltschema kann beispielsweise durch einen Mikrocontroller mit einem Analog-Digital-Wandler (A/D-Wandler) erreicht werden. Alternativ können Schaltungen (siehe weiter unten) vorgesehen sein, die ohne Mikrocontroller auskommen und besonders kostengünstig realisierbar sind.
Für eine ideale sinusförmige Netzspannung

$$U(t) = U_0 * \sin(w\ t)$$

wäre der Schaltzeitpunkt

$$t_i = \arcsin(U_i(I(t)) / U_0) / w, \quad (4)$$

wobei

$w = 2*pi*f$     die Netzfrequenz (wird auch mit dem kleinen griechischen Buchstaben Omega abgekürzt) und
$I(t)$     den eingeprägten Strom des Stromreglers

bezeichnen.

Mit der vereinfachenden Annahme

$$U_i(I) \sim U_i(I_{Nenn}) = U_i$$

gilt

$$t_i = \arcsin(U_i / U_0) / w \qquad\qquad (5).$$

Die Werte $t_i$ aus der Gleichung (5) sind z.B. in Form einer Wertetabelle für eine Zeitsteuerung beispielsweise in einem kostengünstigen Mikrocontroller oder einer anwendungsspezifischen integrierten Schaltung (ASIC: application-specific integrated circuit) hinterlegbar.

Lösungsstrategie für die Nebenbedingung (C)

Die Nebenbedingung (C) kann z.B. mittels der nachfolgend dargestellten Maßnahmen erfüllt bzw. verbessert werden:

(i) Bei ansteigender Netzspannung (im 1. und 3. Quadranten) werden Schaltzeitpunkte

$$t_i' = t_i + dt_i$$

gezielt verzögert, so dass die Ströme wunschgemäß verteilt werden. Im Fall der fallenden Netzspannung (im 2. und 4. Quadranten) werden die Schaltzeitpunkte vorverlegt, so dass die Nebenbedingung (C) besser erfüllt wird.

(ii) Die Kurvenform des eingeprägten Stromes I(t) des Stromreglers wird so modifiziert, dass die Nebenbedingung (C) besser erfüllt wird.

(iii) Die Anzahlen der LEDs pro LED-Segment werden so bestimmt, dass die Nebenbedingung (C) besser erfüllt wird.

Die Maßnahme (i) kann in der Regel die Nebenbedingung (C) vollständig erfüllen, hat jedoch den Nachteil, dass die Nebenbedingung (B) dadurch (leicht) verletzt wird. Insgesamt kann dies zu einer geringfügig erhöhten Verlustleistung führen.

Die Werte $dt_i$ sind vorzugsweise Gegenstand einer numerischen Optimierung als Funktion der mittleren Eingangsspannung $U_{in}$. Die Werte $t_i'$ können beispielsweise in einem Speicher eines Mikrocontrollers für alle Eingangsspannungen $U_{in}$ abgelegt sein.

Die Maßnahme (ii) ist beispielsweise durch Vorgaben an den Powerfaktor und die Oberwellen begrenzt. Diese Beschränkung hängt gemäß den einschlägigen Normen von der Leistungsklasse (z.B. größer oder kleiner als 25W) ab. Eine Stromkomponente mit der Frequenz der dritten Netzoberwelle ist in gewissen Grenzen in den Normen erlaubt und wirkt sich gegebenenfalls auch positiv auf die Nebenbedingung (C) aus.

Die Maßnahme (ii) kann z.B. erreicht werden durch Modifikation der Ansteuerung des Stromreglers 104. Beispielsweise könnte die dritte Oberwelle des Stroms als eine Funktion der mittleren Netzspannung eingeführt bzw. verändert werden. Die Auslegung der Steuerung kann z.B. über eine numerische Optimierung erfolgen.

Die Maßnahme (iii) kann für nur einen Betriebsspannungspunkt optimiert werden.

Beispielsweise können die Maßnahmen (iii) und ggf. auch (ii) für die Nennspannung optimiert werden. Mit der Maßnahme (i) kann dann eine Korrektur über den gesamten Betriebsspannungsbereich erfolgen.

Beispielhafte Konkretisierung

Eine ideale Verzögerung der Schaltzeit $dt_i$ kann ggf. nicht rein analytisch bestimmt werden und ist womöglich auch nicht eindeutig.

Es gibt mehr Schaltzeiten $dt_i$ als LED-Segmente vorhanden sind. Damit gibt es mehr Stellgrößen als für die Erfüllung der Nebenbedingungen erforderlich sind. Das Optimierungsproblem kann numerisch als nichtlineares Optimierungsproblem gemäß der Nebenbedingung (C) unter Berücksichtigung (Einhaltung) der Nebenbedingung (A) gelöst werden. Hierbei kann die Nebenbedingung (B), wie vorstehend erläutert, in gewissem Maße verletzt werden.

Als eine Optimierungsgröße $E_{err}$ ($U_{in}$, $t_i'$) kann z.B. die Summe der Fehlerquadrate, also Abweichungen der Segment Ströme vom jeweiligen Sollstrom des LED-Segments verwendet werden.

Nachfolgend wird ein konkretes Beispiel für eine solche Optimierungsaufgabe betrachtet. Es wird von einer vierstufigen Anordnung (vier LED-Segmente) mit folgenden Parametern ausgegangen: Das erste LED-Segment weist 6 in Reihe geschaltete LEDs, das zweite LED-Segment weist 12 in Reihe geschaltete LEDs, das dritte LED-Segment weist 24 in Reihe geschaltete LEDs und das vierte LED-Segment weist 51 in Reihe geschaltete LEDs auf. Weiterhin gelten die folgenden Beziehungen:

Vorwärtsspannung je LED:     Uf = 3,2V (bei dem Nennstrom $I_{Nenn}$)
Parasitäre Spannung:     Up = 6,2 V
Powerfaktor:     PF = 1,00 (ideal sinusförmige Spannungs- und Stromkurve)

Eine theoretische Effizienz ist eine Funktion der Eingangsspannung und ein Maß für die Asymmetrie der mittleren Stromverteilung zwischen den Segmenten. Die theoretische Effizienz $eff_{th}$ berechnet sich dabei aus dem Verhältnis der LED Spannung $U_i$ zu allen anderen Spannungsabfällen. Mögliche dynamische Schalverluste werden hierbei zur vereinfachten Darstellbarkeit nicht berücksichtigt.

```
eff_th = INT (0..T) [ U_LED(t) * I(t) ] / INT (0..T) [
U_in(t) * I(t) ]
```

Hierbei kann fast über den gesamten Betriebsspannungsbereich eine elektrische Effizienz von mehr als 90% erreicht werden. Die Schaltspannungen der einzelnen elektronischen Schalter, die jeweils einem der vier LED-Segmente parallel geschaltet sind, sind beispielsweise fest eingestellt und folgen den Nebenbedingungen (A) und (B), wodurch sich eine optimierte Effizienz ergibt.

Beispielhafte Optimierung der LED Effizienz

Zusätzlich kann eine Strommodulation durch die Stromvorgabe I(t) in dem Stromregler sowie der Schaltrhythmus bei der Ansteuerung der elektronischen Schalter zu einer unerwünschten Lichtmodulation und zu einer suboptimalen Effizienz des LED-Betriebs führen.

Die Verringerung der LED Effizienz ist eine Folge des sogenannten Droop Effektes. Der höhere Strom in den zeitlich begrenzten Einschaltphasen der LED-Segmente führt im Vergleich zu einem kontinuierlichen Konstantstrombetrieb mit gleichem Strommittelwert zu einer reduzierten Effizienz. Für die gleiche Effizienz wie im kontinuierlichen Konstantstrombetrieb müsste eine größere Chipfläche verwendet werden, um die Stromdichte in den LED-Chips zu senken. Anders ausgedrückt ist die Chipflächennutzung im getakteten Betrieb schlechter als im Konstantstrombetrieb.

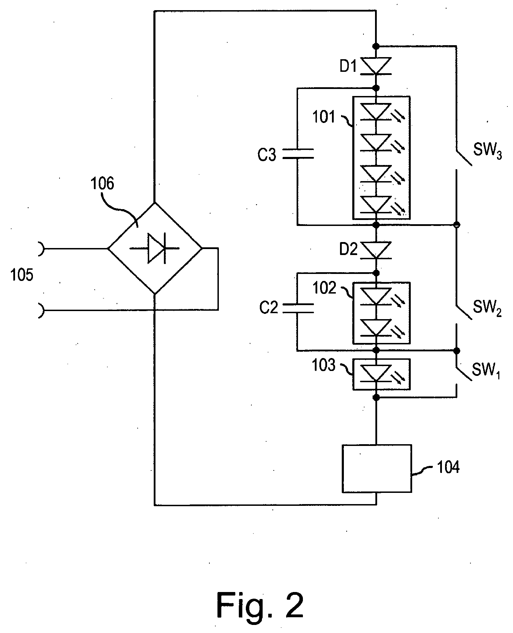

**Fig.2** zeigt eine schematische Schaltung zur Ansteuerung dreier LED-Segmente, wobei die LED-Segmente unterschiedlich viele LEDs aufweisen, wobei zwischen einzelnen LEDs. teilweise eine Entkoppeldiode und parallel zu einer Auswahl der LED-Segmente ein Pufferkondensator angeordnet ist.

Die in Fig.2 dargestellte Schaltung bezieht sich in Teilen auf die Schaltung gemäß Fig.1. Im Unterschied zu Fig.1 umfasst die Serienschaltung eine Diode D1, das LED-Segment 101, eine Diode D2, das LED-Segment 102, das LED-Segment 103 und den Stromregler 104. Bei den Dioden D1 und D2 handelt es sich um Entkoppeldioden. Die Dioden D1 und D2 sind wie die LEDs gepolt, d.h. alle Kathoden der Dioden weisen in Richtung des negativen Pols.

Der Schalter $SW_3$ ist parallel zu der Serienschaltung aus Diode D1 und LED-Segment 101 angeordnet. Der Schalter $SW_2$ ist parallel zu der Serienschaltung aus Diode D2 und LED-Segment 102 angeordnet. Der Schalter $SW_1$ ist parallel zu dem LED-Segment 103 angeordnet.

Zusätzlich ist in Fig.2 parallel zu dem LED-Segment 101-ein Pufferkondensator C3 und parallel zu dem LED-Segment 102 ein Pufferkondensator C2 angeordnet.

Die Schaltung gemäß Fig.2 vermeidet den vorstehend beschriebenen Nachteil der unerwünschten Lichtmodulation. Durch die Pufferkondensatoren C2 und C3 (die z.B. als Elektrolytkondensatoren ausgeführt sind) wird ein kontinuierlicher Betrieb der LEDs ermöglicht. Die Strommodulation hängt von der Kapazität des Kondensators und der Steilheit der LED-Kennlinie ab. Je größer der Pufferkondensator, desto geringer ist die Modulation.

Die Entkoppeldioden D1 und D2 zwischen den LED-Segmenten verhindern die Entladung der Pufferkondensatoren C2 und C3 über die Schalter.

Um ein unerwünschtes Flickern mit der doppelten Netzfrequenz zu verhindern, kann das LED-Segment mit der höchsten Vorwärtsspannung (im Beispiel gemäß Fig.2 das LED-Segment 101) z.B. mit einem entsprechend groß dimensionierten parallel geschalteten Pufferkondensator C3 gepuffert werden.

Die verbleibenden LED-Segmente können z.B. mit einer höheren Frequenz als der doppelten Netzfrequenz betrieben werden und tragen daher kaum oder gar nicht zu einem wahrnehmbaren Flickern bei.

Hierbei ist es von Vorteil, dass der Pufferkondensator (im Beispiel der Fig.2 der Kondensator C3) nur für eine geringere als die maximale Netzspannung ausgelegt werden muss. In Fig.2 ist diese reduzierte Spannung bestimmt durch die Vorwärtsspannung $U_{f3}$ der LEDs des LED-Segments 101.

Vorzugsweise können alle LED-Segmente (insbesondere solche LED-Segmente mit einer Vorwärtsspannung, die höher als ein vorgegebener Schwellwert ist) mit parallelgeschalteten Pufferkondensatoren gepuffert werden. Umfasst ein LED-Segment jedoch wenige LEDs oder nur eine einzelne LED, kann der Pufferkondensator entfallen (siehe diesbezüglich beispielhaft LED-Segment 103 in Fig.2).

Eine vorteilhafte Ausführung besteht darin, nur diejenigen LED-Segmente mit parallelgeschalteten Pufferkondensatoren zu versehen ("zu puffern"), die die meisten in Reihe geschalteten LEDs bzw. die größten Vorwärtsspannungen aufweisen. Beispielsweise kann nur dasjenige LED-Segment mit der größten Vorwärtsspannung oder aber die beiden LED-Segmente mit den größten Vorwärtsspannungen entsprechend gepuffert werden.

Die für die Pufferkondensatoren erforderliche Kapazität ist für alle LED-Segmente beispielsweise in etwa gleich, da der verfügbare Spannungshub bei den kürzeren Ketten zwar abnimmt, aber gleichzeitig die Frequenz bei den kürzeren Ketten höher ist.

Am Beispiel der vorstehend gezeigten tabellarischen Aufstellung ist zu erkennen, dass sich für jeweils die halbe Spannung, und damit verbunden den halben Spannungshub $dU_m$, die Frequenz im Schaltrhythmus verdoppelt. Die zu überbrückenden stromlosen Phasen der Dauer $dt_m$ sind also nur halb so lang. Für den gleichen Sollstrom $I_{Soll,m}$ (symmetrisch) sind bspw. alle Pufferkondensatoren $C_m$ gleich dimensioniert. Die Spannungsbelastungen sind dabei unterschiedlich:

$$Q = I_{Soll,m} * dt_m = C_m * dU_m \qquad\qquad (6).$$

Automatische Erzeugung des Schaltrhythmus

Die Ansteuerung der Schalter in Fig.1 und Fig.2 beispielhaft dargestellten elektronischen Schalter $SW_1$ bis $SW_3$ kann mittels einer Steuereinheit, z.B. eines Mikrocontrollers, erfolgen. Aufgrund der veränderlichen ("floatenden") Potentiale kann dies anhand einer potentialfreien (galvanisch getrennten) Ansteuerung erfolgen. Eine solche Realisierung ist aber verhältnismäßig aufwändig und damit teuer.

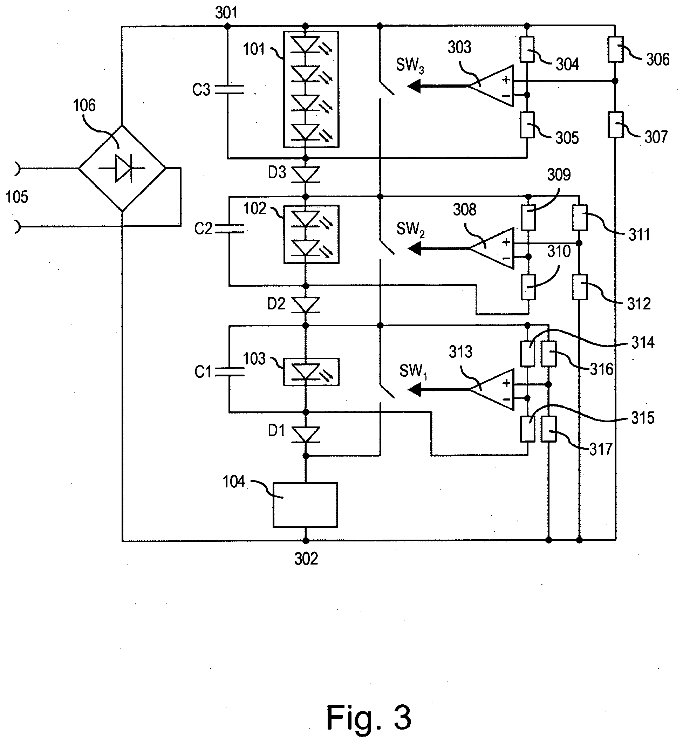

**Fig.3** zeigt eine schematische Schaltungsanordnung zur Ansteuerung mehrerer elektronischer Schalter mittels Komparatoren.

Wie bereits im Hinblick auf Fig.1 erläutert, wird die Netzwechselspannung 105 über einen Gleichrichter 106 gleichgerichtet und die gleichgerichtete "pulsierende" Netzspannung zwischen zwei Knoten 301 und 302 angelegt.

Eine Serienschaltung aus dem LED-Segment 101, einer Diode D3, dem LED-Segment 102, der Diode D2, dem LED-Segment 103, der Diode D1 und dem Stromregler 104 verbindet die Knoten 301 und 302. Parallel zu dem LED-Segment 101 ist der Pufferkondensator C3, parallel zu dem LED-Segment 102 ist der Pufferkondensator C2 und parallel zu dem LED-Segment 103 ist ein Pufferkondensator C1 angeordnet.

Der Schalter $SW_3$ ist parallel zu der Serienschaltung aus LED-Segment 101 und Diode D3 angeordnet. Der Schalter $SW_2$ ist parallel zu der Serienschaltung aus LED-Segment 102 und Diode D2 angeordnet. Der Schalter $SW_1$ ist parallel zu der Serienschaltung aus LED-Segment 103 und Diode D1 angeordnet.

Der Schalter $SW_3$ wird über den Ausgang eines Komparators 303 angesteuert. Parallel zu dem LED-Segment 101 ist ein Spannungsteiler umfassend eine Serienschaltung aus Widerständen 304 und 305 angeordnet, wobei der Mittenabgriff dieses Spannungsteilers mit dem invertierenden Eingang des Komparators 303 verbunden ist. Die Knoten 301 und 302 sind über einen Spannungsteiler umfassend eine Serienschaltung aus Widerständen 306 und 307 verbunden, wobei der Mittenabgriff dieses Spannungsteilers mit dem nichtinvertierenden Eingang des Komparators 303 verbunden ist.

Der Schalter $SW_2$ wird über den Ausgang eines Komparators 308 angesteuert. Parallel zu dem LED-Segment 102 ist ein Spannungsteiler umfassend eine Serienschaltung aus Widerständen 309 und 310 angeordnet, wobei der Mittenabgriff dieses Spannungsteilers mit dem invertierenden Eingang des Komparators 308 verbunden ist. Der Knoten oberhalb des LED-Segments 102 und der Knoten 302 sind über einen Spannungsteiler umfassend eine Serienschaltung aus Widerständen 311 und 312 verbunden, wobei der Mittenabgriff dieses Spannungsteilers mit dem nichtinvertierenden Eingang des Komparators 308 verbunden ist.

Der Schalter $SW_1$ wird über den Ausgang eines Komparators 313 angesteuert. Parallel zu dem LED-Segment 103 ist ein Spannungsteiler umfassend eine Serienschaltung aus Widerständen 314 und 315 angeordnet, wobei der Mittenabgriff dieses Spannungsteilers mit dem invertierenden Eingang des Komparators 313 verbunden ist. Der Knoten oberhalb des LED-Segments 103 und der Knoten 302 sind über einen Spannungsteiler umfassend eine Serienschaltung aus Widerständen 316 und 317 verbunden, wobei der Mittenabgriff dieses Spannungsteilers mit dem nichtinvertierenden Eingang des Komparators 313 verbunden ist.

Die Ansteuerung der elektronischen Schalter $SW_1$ bis $SW_3$ erfolgt gemäß Fig.3 anhand der Komparatoren 303, 308 und 313. Vorzugsweise erfolgt die Ansteuerung derart, dass die Schalter $SW_1$ bis $SW_3$ dann geöffnet werden, wenn die Spannung zwischen dem Bezugspotential der LED-Segmente (im Beispiel gemäß Fig.3 am oben Ende des jeweiligen LED-Segments) und dem Knoten 302 größer ist als die Vorwärtsspannung des jeweiligen LED-Segments.

Die Spannungsdifferenz zwischen dem Bezugspotential des LED-Segments m (am oberen Ende des jeweiligen LED-Segments) und dem Knoten 302 wird nachfolgend auch als Spannungsdifferenz (oder Steuerspannung) $US_m$ für das LED-Segment m bezeichnet.

Diese Spannungsdifferenz $US_m$ umfasst auch den Spannungsabfall aller zwischen dem LED-Segment m und dem Knoten 302 liegenden anderen LED-Segmente. Wenn das LED-Segment m aktiv geschaltet wird, werden auch die Spannungen an den anderen LED-Segmenten $US_j$ für all j<m beeinflusst, wodurch auch diese LED-Segmente nahezu gleichzeitig schalten. Daraus ergibt sich der gewünschte Schaltrhythmus.

Die Spannung des LED-Segments m kann vom Komparator direkt gemessen werden, wenn die Kette über einen Puffer Kondensator $C_m$ verfügt. Andernfalls kann die Spannung an dem LED-Segment über eine analoge Referenzspannung oder über eine Abtast-Halte-Schaltung ("Sample and Hold"-Schaltung) nachgebildet werden.

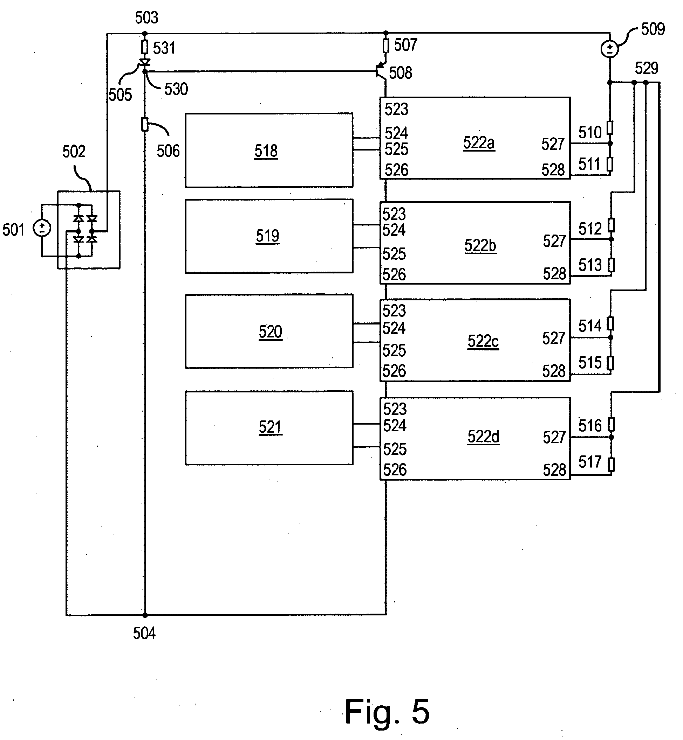

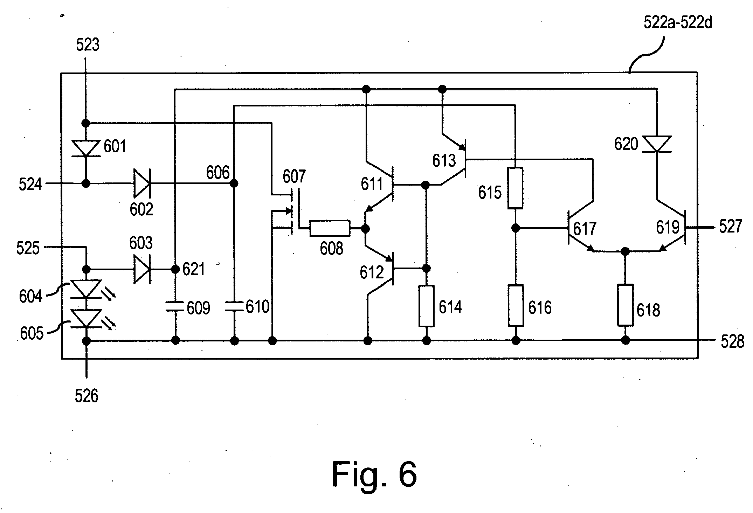

**Fig.5** und **Fig.6** zeigen eine Schaltungsanordnung mit einer solchen Abtast-Halte-Schaltung und vier LED-Segmenten. Die vorstehend erläuterten Komparatoren sind in Fig.5 und Fig.6 kostengünstig mittels diskreter Bauelemente realisiert.

Eine Netzwechselspannung 501 ist über einen Gleichrichter 502 mit zwei Knoten 503 und 504 verbunden. Der Knoten 503 ist über einen Widerstand 531 und eine Diode 505 mit einem Knoten 530 verbunden, wobei die Kathode der Diode 505 in Richtung des Knotens 530 zeigt. Der Knoten 530 ist über einen Widerstand 506 mit dem Knoten 504 verbunden. Der Knoten 530 ist mit der Basis eines pnp-Transistors 508 verbunden, der Emitter des Transistors 508 ist über einen Widerstand 507 mit dem Knoten 503 und der Kollektor des Transistors 508 ist mit einem Anschluss 523 eines Moduls 522a verbunden.

Fig.5 zeigt mehrere Module 522a bis 522d, die jeweils über Anschlüsse 523 bis 528 verfügen und jeweils vergleichbar ausgeführt sind. Eine beispielhafte Realisierung der Module 522a bis 522d ist in Fig.6 dargestellt.

Ein Modul 518 umfasst eine Reihenschaltung von fünf LEDs, ein Modul 519 umfasst eine Reihenschaltung von 12 LEDs, ein Modul 520 umfasst eine Reihenschaltung von 24 LEDs und ein Modul 521 umfasst eine Reihenschaltung von 54 LEDs. Die Anschlüsse 524 und 525 des Moduls 522a sind mit dem Modul 518, die Anschlüsse 524 und 525 des Moduls 522b sind mit dem Modul 519, die Anschlüsse 524 und 525 des Moduls 522c sind mit dem Modul 520 und die Anschlüsse 524 und 525 des Moduls 522d sind mit dem Modul 521 verbunden. Die Kathoden der LEDs der Module 518 bis 521 sind hierbei in Richtung des Knotens 504 ausgerichtet.

Der Anschluss 526 des Moduls 522a ist mit dem Anschluss 523 des Moduls 522b, der Anschluss 526 des Moduls 522b ist mit dem Anschluss 523 des Moduls 522c und der Anschluss 526 des Moduls 522c ist mit dem Anschluss 523 des Moduls 522d verbunden. Der Anschluss 526 des Moduls 522d ist mit dem Knoten 504 verbunden.

Der Knoten 503 ist über eine Spannungsquelle 509 (optional über vier unterschiedlich ansteuerbare Spannungsquellen) mit einem Knoten 529 verbunden.

Der Knoten 529 ist über einen Widerstand 510 mit dem Anschluss 527 des Moduls 522a und über eine Serienschaltung aus dem Widerstand 510 und einem Widerstand 511 mit dem Anschluss 528 des Moduls 522a verbunden. Der Knoten 529 ist über einen Widerstand 512 mit dem Anschluss 527 des Moduls 522b und über eine Serienschaltung aus dem Widerstand 512 und einem Widerstand 513 mit dem Anschluss 528 des Moduls 522b verbunden. Der Knoten 529 ist über einen Widerstand 514 mit dem Anschluss 527 des Moduls 522c und über eine Serienschaltung aus dem Widerstand 514 und einem Widerstand 515 mit dem Anschluss 528 des Moduls 522c verbunden. Der Knoten 529 ist über einen Widerstand 516 mit dem Anschluss 527 des Moduls 522d und über eine Serienschaltung aus dem Widerstand 516 und einem Widerstand 517 mit dem Anschluss 528 des Moduls 522d verbunden.

Fig.6 zeigt den inneren Aufbau der Module 522a bis 522d sowie deren Anschlüsse 523 bis 528.

Der Anschluss 523 ist über eine Diode 601 mit dem Anschluss 524 verbunden, wobei die Kathode der Diode 601 in Richtung des Anschlusses 524 zeigt. Der Anschluss 524 ist weiterhin über eine Diode 602 mit einem Knoten 606 verbunden, wobei die Kathode der Diode 602 in Richtung des Knotens 606 zeigt. Der Anschluss 523 ist außerdem mit dem Drain-Anschluss eines n-Kanal Mosfets 607 verbunden. Der Source-Anschluss des Mosfets 607 ist mit dem Anschluss 526 verbunden. Der Knoten 606 ist über einen Kondensator 610 mit dem Anschluss 526 verbunden. Der Knoten 606 ist zudem über einen Widerstand 615 mit der Basis eines npn-Transistors 617 verbunden. Die Basis des Transistors 617 ist über einen Widerstand 616 mit dem Anschluss 526 verbunden.

Der Anschluss 525 ist über eine Diode 603 mit einem Knoten 621 verbunden, wobei die Kathode der Diode 603 in Richtung des Knotens 621 zeigt. Der Knoten 621 ist über einen Kondensator 609 mit dem Anschluss 526 verbunden. Der Anschluss 525 ist über eine Reihenschaltung aus zwei LEDs 604 und 605 mit dem Anschluss 526 verbunden, wobei die Kathoden der LEDs 604 und 605 in Richtung des Anschlusses 526 zeigen.

Der Knoten 621 ist mit dem Kollektor eines npn-Transistors 611 verbunden. Der Emitter des Transistors 611 ist über einen Widerstand 608 mit dem Gate-Anschluss des Mosfets 607 verbunden. Weiterhin ist der Emitter des Transistors 611 mit dem Emitter eines pnp-Transistors 612 verbunden. Der Kollektor des Transistors 612 ist mit dem Anschluss 526 verbunden.

Der Knoten 621 ist mit dem Emitter eines pnp-Transistors 613 verbunden. Der Kollektor des Transistors 613 ist mit der Basis des Transistors 611, mit der Basis des Transistors 612 und über einen Widerstand 614 mit dem Anschluss 526 verbunden.

Der Knoten 621 ist über eine Diode 620 mit dem Kollektor eines npn-Transistors 619 verbunden, wobei die Kathode der Diode 620 in Richtung des Kollektors zeigt. Der Emitter des Transistors 619 ist mit dem Emitter des Transistors 617 und über einen Widerstand 618 mit dem Anschluss 526 verbunden. Der Kollektor des Transistors 617 ist mit der Basis des Transistors 613 verbunden. Die Basis des Transistors 619 ist mit dem Anschluss 527 verbunden und der Anschluss 526 ist mit dem Anschluss 528 verbunden.

Beispielhaft weist die in Fig.5 und Fig.6 dargestellte Schaltung die folgenden Bauteile bzw. Dimensionierungen auf (Widerstände in Ohm, Kondensatoren in Farad): R_531=3,3k; R_506=200k, R_507=100; R_510=27k; R_512-47k; R_514=100k; R_516=200k; R_511=R_513=R_515-R_517=3,3k; R_608=10; R_614=22k; R_616=3,3k; R_618=22k; C_609=C_610=1$\mu$. Der Widerstand 615 hat abhängig von dem Modul 522a bis 522d unterschiedliche Werte, z.B. in Modul 522a 27k, in Modul 522b 47k, in Modul 522c 100k und in Modul 522d 200k.

Um die vorstehend erläuterte Nebenbedingung (A) zu erfüllen, ist es ggf. von Vorteil, die Spannungsdifferenz $US_m$ als Vergleichswert zur jeweiligen LED Kettenspannung $U_i$ geringfügig zu verringern. So können parasitäre Spannungsabfälle Up an den Entkoppeldioden 601 und an dem Stromregler 508 ausgeglichen werden. Diese Reduzierung der Spannungsdifferenzen $US_m$ kann durch eine oder mehrere Spannungsquellen $UO_m$ erreicht werden.

Die Spannungsquelle 509 kann z.B. einen minimalen Spannungsabfall an dem Stromregler 104 steuern. Dafür ist die Spannungsquelle 509 beispielsweise derart ausgelegt, dass der Stromregler 104 in jedem Betriebsfall bestimmungsgemäß (also ohne Stromunterbrechungen) arbeiten kann. Weiterhin soll der mittlere Spannungsabfall an dem Stromregler 104 zur Optimierung von Verlusten vorzugsweise so gering wie möglich sein.

Nebenbedingung (C) & Symmetrisierung

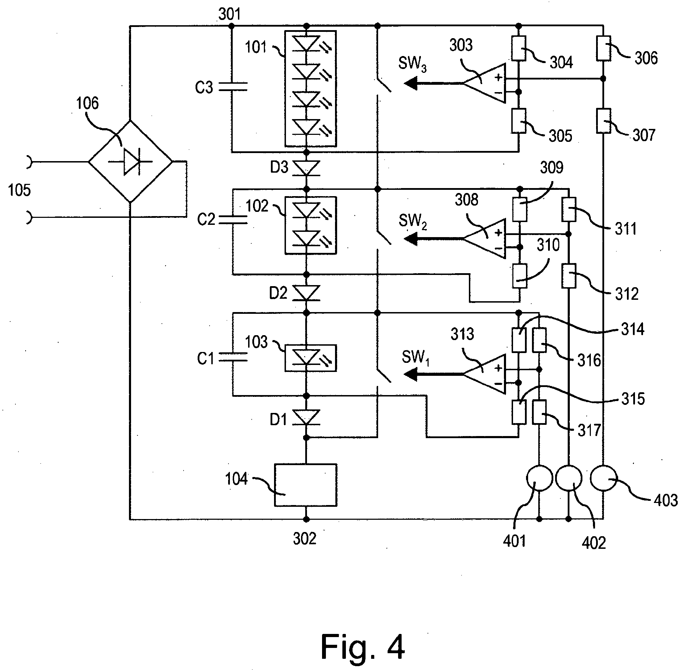

Fig.4 zeigt basierend auf der Darstellung von Fig.3 mehrere Spannungsquellen zur Symmetrisierung der Ströme zwischen den einzelnen LED-Segmenten.

Im Unterschied zu Fig.3 sind in Fig4 die Widerstände 317, 312 und 307 nicht direkt mit dem Knoten 302 verbunden. Stattdessen ist der Widerstand 317 über eine Spannungsquelle 401, der Widerstand 312 über eine Spannungsquelle 402 und der Widerstand 307 über eine Spannungsquelle 403 mit dem Knoten 302 verbunden.

Die Spannungsquellen 401 bis 403 werden angesteuert in Abhängigkeit von einem Mittelwert der Eingangsspannung. Ein solcher Mittelwert steht insbesondere in einer Beziehung zu der mittleren (gleichgerichteten) Netzspannung. Die Spannungsquellen 401 bis 403 werden somit unter Berücksichtigung der Nebenbedingung (C) angesteuert und bewirken eine kontrollierte Schaltverzögerung für das LED-Segment m.

Die Spannungsquellen 401 bis 403 können genutzt werden, um den Strom durch den Stromregler 104 zu steuern; beispielsweise kann der Stromregler 104 als ein Widerstand ausgeführt sein, wobei der Strom durch diesen Widerstand mittels der Spannungsquellen 401 bis 403 einstellbar ist.

Analog zur numerischen Lösung des nichtlinearen Optimierungsproblems für die Nebenbedingung (C) für den Fall der zeitgesteuerten Schaltungsanordnung gemäß den obigen Ausführungen, können auch die optimalen Werte für die Spannungsquellen $UO_i(U_{in})$ als Funktion der effektiven Eingangsspannung $U_{in,eff}$ bestimmt werden.

Dies kann z.B. erreicht werden durch eine numerische Optimierung, wobei eine Fehlerfunktion $E_{rr}$ als Funktion der Spannungen an den Spannungsquelle $UO_m$ anstatt der Zeiten $t_i$ ausgedrückt wird.

Somit kann die Asymmetrie beispielhaft durch die Fehlerfunktion $E_{rr}$ erfasst werden. Die Fehlerfunktion $E_{rr}$ wird z.B. abhängig von den Spannungen $UO_m(U_{in})$ ermittelt. Die Spannungen $UO_m(U_{in})$ können im Rahmen einer Optimierung für alle Eingangsspannungen $U_{in}$ so angepasst werden, dass die Fehlerfunktion minimal wird.

Alternativ oder zusätzlich kann die Fehlerfunktion $E_{rr}$ als eine Funktion der Länge der Halbleiterleuchtelemente (z.B. die Anzahl der (jeweiligen) Halbleiterleuchtelemente) und/oder als eine Funktion über die Spannungsquellen ausgedrückt werden. Im Rahmen der numerischen Optimierung kann demnach eine günstige Auslegung bestimmt werden unter Berücksichtigung z.B. der Freiheitsgrade: Anzahl der Halbleiterleuchtelemente, Anzahl der Segmente, Einstellung der Spannungsquellen (pro Segment), Stromform (Oberwellen).

Beispielsweise können in einer Anordnung mit M LED-Segmenten M frei wählbare Parameter $UO_m(U_{in})$ zu Optimierung der Nebenbedingung (C) zur Verfügung stehen.

Zusätzliche beispielhafte Implementierungen

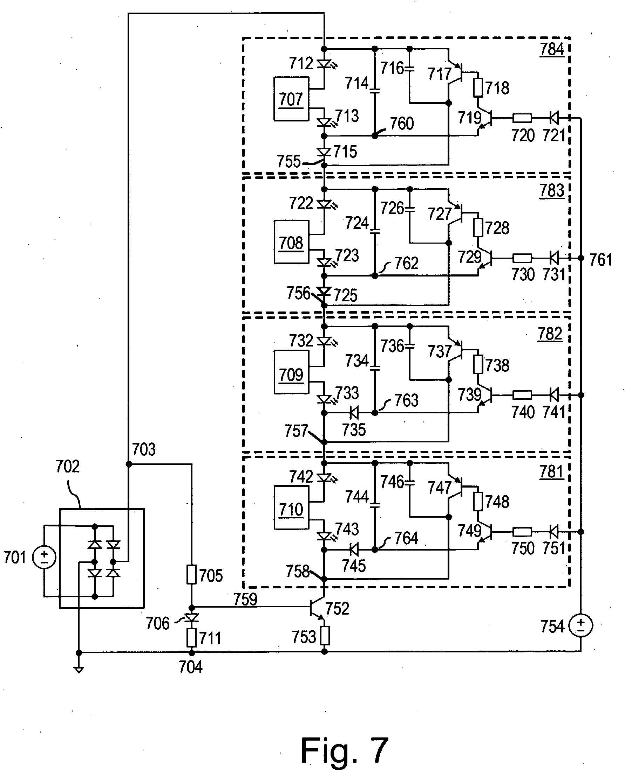

Fig.7 zeigt eine alternative Schaltungsanordnung zu Fig.5. Eine Netzwechselspannung 701 ist über einen Gleichrichter 702 mit zwei Knoten 703 und 704 verbunden. Der Knoten 703 ist über einen Widerstand 705 mit einem Knoten 759 verbunden. Der Knoten 759 ist über eine Diode 706 und einen Widerstand 711 mit dem Knoten 704 verbunden, wobei die Kathode der Diode 706 in Richtung des Knotens 704 zeigt. Der Knoten 759 ist mit der Basis eines npn Transistors 752 verbunden. Der Emitter des Transistors 752 ist über einen Widerstand 753 mit dem Knoten 704 verbunden.

Der Knoten 703 ist über eine Reihenschaltung umfassend eine LED 712, ein Modul 707 und eine LED 713 mit einem Knoten 760 verbunden. Das Modul 707 umfasst eine Reihenschaltung aus mehreren LEDs, beispielsweise 54 LEDs. Der Knoten 703 ist über einen Pufferkondensator 714 mit dem Knoten 760 verbunden. Der Knoten 703 ist über einen Kondensator 716 mit einem Knoten 755 verbunden. Der Knoten 760 ist über eine Diode 715 mit dem Knoten 755 verbunden, wobei die Kathode der Diode 715 in Richtung des Knotens 755 zeigt. Der Knoten 703 ist mit dem Emitter eines pnp-Transistors 717 verbunden. Der Kollektor des Transistors 717 ist mit dem Knoten 755 verbunden. Die Basis des Transistors 717 ist über einen Widerstand 718 mit dem Kollektor eines npn-Transistors 719 verbunden. Der Emitter des Transistors 719 ist mit dem Knoten 760 verbunden. Die Basis des Transistors 719 ist über eine Serienschaltung aus einem Widerstand 720 und einer Diode 721 mit einem Knoten 761 verbunden, wobei die Kathode der Diode 721 in Richtung der Basis des Transistors 719 zeigt.

Der Knoten 755 ist über eine Reihenschaltung aus einer LED 722, einem Modul 708 und einer LED 723 mit einem Knoten 762 verbunden. Das Modul 708 umfasst 24 in Reihe geschaltete LEDs. Der Knoten 755 ist über einen Pufferkondensator 724 mit einem Knoten 762 verbunden. Der Knoten 762 ist über eine Entkoppeldiode 725 mit dem Knoten 756 verbunden, wobei die Kathode der Diode 725 in Richtung des Knotens 756 zeigt. Der Knoten 755 ist über einen Kondensator 726 mit dem Knoten 756 verbunden. Der Knoten 755 ist mit dem Emitter eines pnp-Transistors 727 verbunden. Der Kollektor des Transistors 727 ist mit dem Knoten 756 verbunden. Die Basis des Transistors 727 ist über einen Widerstand 728 mit dem Kollektor eines npn-Transistors 729 verbunden. Der Emitter des Transistors 729 ist mit dem Knoten 762 verbunden. Die Basis des Transistors 729 ist über eine Reihenschaltung aus einem Widerstand 730 und einer Diode 731 mit dem Knoten 761 verbunden, wobei die Kathode der Diode 731 in Richtung der Basis des Transistors 729 zeigt.

Der Knoten 756 ist über eine Reihenschaltung umfassend eine LED 732, ein Modul 709 und eine LED 733 mit einem Knoten 757 verbunden. Das Modul 709 umfasst dabei eine Reihenschaltung aus zwölf LEDs. Der Knoten 756 ist über einen Kondensator 734 mit einem Knoten 763 verbunden. Der Knoten 756 ist über einen Kondensator 736 mit dem Knoten 757 verbunden. Der Knoten 756 ist mit dem Emitter eines pnp-Transistors 737 verbunden. Der Kollektor des Transistors 737 ist mit dem Knoten 757 verbunden. Die Basis des Transistors 737 ist über einen Widerstand 738 mit dem Kollektor eines npn-Transistors 739 verbunden. Der Emitter des Transistors 739 ist mit dem Knoten 763 verbunden. Der Knoten 763 ist mit einer Diode 735 mit dem Knoten 757 verbunden, wobei die Kathode der Diode 735 in Richtung des Knoten 757 zeigt. Die Basis des Transistors 739 ist über eine Reihenschaltung aus einem Widerstand 740 und einer Diode 741 mit dem Knoten 761 verbunden, wobei die Kathode der Diode 741 in Richtung der Basis des Transistors 739 zeigt.

Der Knoten 757 ist über eine Reihenschaltung aus einer LED 742, einem Modul 710 und einer LED 743 mit einem Knoten 758 verbunden. Das Modul 710 umfasst eine Reihenschaltung aus fünf LEDs. Der Knoten 757 ist über einen Kondensator 7.44 mit einem Knoten 764 verbunden. Der Knoten 764 ist über eine Diode 745 mit dem Knoten 758 verbunden, wobei die Kathode der Diode 745 in Richtung des Knotens 758 zeigt. Der Knoten 758 ist ferner mit dem Kollektor des Transistors 752 verbunden. Der Knoten 757 ist über einen Kondensator 746 mit dem Knoten 758 verbunden. Der Knoten 757 ist mit dem Emitter eines pnp-Transistors 7.47 verbunden. Der Kollektor des Transistors 747 ist mit dem Knoten 758 verbunden. Die Basis des Transistors 747 ist über einen Widerstand 748 mit dem Kollektor eines npn-Transistors 749 verbunden. Der Emitter des Transistors 749 ist mit dem Knoten 764 verbunden. Die Basis des Transistors 749 ist über eine Reihenschaltung aus einem Widerstand 750 und einer Diode 751 mit dem Knoten 761 verbunden, wobei die Kathode der Diode 751 in Richtung der Basis des Transistors 749 zeigt.

Der Knoten 761 ist über eine Spannungsquelle 754 mit dem Knoten 704 verbunden.

Im Hinblick auf Fig.7 sei angemerkt, dass die Kathoden der LEDs jeweils in Richtung des Knotens 704 ausgerichtet sind.

Beispielhaft weist die in Fig.7 dargestellte Schaltung die folgenden Bauteile bzw. Dimensionierungen auf (Widerstände in Ohm, Kondensatoren in Farad): R_705=200k; R_711=3,3k; R_753=100; R_720=R_730=R_740=R_750=220k; R_718=220k; R_728=110k; R_738=56k; R_748=27k; C_716=C_726=C_736=C_746=1p; C_714=47μ; C_724=C_734=C_744=1μ.

Der Pufferkondensator 714 ist vergleichsweise groß dimensioniert und funktioniert als Puffer-Kondensator für die LEDs des Moduls 707 sowie die LEDs 712 und 713. Hierbei ist es von Vorteil, dass der Pufferkondensator 714 lediglich für die an diesen LEDs abfallende Spannung und nicht für die volle Höhe der Netzspannung ausgelegt werden muss. Entsprechend kann der Pufferkondensator 714 kleiner und damit platzsparender ausgeführt sein. Eine Option besteht darin, dass der Pufferkondensator 714 ein Elektrolytkondensator ist; insbesondere kann der Pufferkondensator 714 der einzige Elektrolytkondensator in der in Fig.7 gezeigten Schaltung sein. Der Pufferkondensator 714 kann über entsprechende Leitungen separat von der kompakten restlichen Schaltung ausgeführt sein. Insbesondere ist es möglich, den Pufferkondensator 714 als austauschbares (z.B. steckbares) Bauteil vorzusehen. So kann sichergestellt werden, dass bei Ausfall des Elektrolytkondensators 714 dieser einfach und schnell ausgetauscht werden kann und damit die Schaltung nach kurzer Zeit wieder funktionsfähig ist.

Die Kondensatoren 716, 726, 736 und 746 stellen kleine parasitäre Kapazitäten dar, die ggf. in einer realen Schaltung auch entfallen können, weil sich derartig geringe Kapazitäten aufgrund des Schaltungsaufbaus selbst ergeben.

Auch die Dioden 721, 731, 741 und 751 sind optional und können ggf. eingespart werden, wenn die Transistoren 719, 729, 739 und 749 entsprechend spannungsfest ausgelegt sind bzw. ausgelegt werden können.

Durch die Dimensionierung der in Fig.7 gezeigten Schaltung kann erreicht werden, dass der Transistor 717 mit einer Schaltfrequenz von ca. 100Hz betrieben wird; ein aufgrund dieser Schaltfrequenz unter Umständen wahrnehmbares Flickern wird durch den Pufferkondensator 714 verhindert.

Der Transistor 727 arbeitet mit einer Schaltfrequenz von ca. 200Hz, der Transistor 737 mit einer Schaltfrequenz von ca. 400Hz und der Transistor 747 mit einer Schaltfrequenz von ca. 800Hz.

Die Kombination aus Pufferkondensator 714 und Diode 715 stellt einen Spitzenwertdetektor (Peak-Detektor) für das LED-Segment umfassend das Modul 707 sowie die LEDs 712 und 713 dar. Entsprechend stellen der Pufferkondensator 724 und die Entkoppeldiode 725 einen Spitzenwertdetektor für das LED-Segment umfassend das Modul 708 sowie die LEDs 722 und 723, der Kondensator 734 und die Diode 735 einen Spitzenwertdetektor für das LED-Segment umfassend das Modul 709 sowie die LEDs 732 und 733 und der Kondensator 744 und die Diode 745 einen Spitzenwertdetektor für das LED-Segment umfassend das Modul 710 sowie die LEDs 742 und 743 dar.

Die Transistoren 719, 729, 739 und 749 agieren als Komparatoren. Die Funktionsweise wird nachfolgend beispielhaft anhand der ersten Stufe für das LED-Segment umfassend das Modul 710 sowie die LEDs 742 und 743 beschrieben.

Für eine einfachere weitere Darstellung wird im Folgenden das LED-Segment umfassend das Modul 710 sowie die LEDs 742 und 743 mit der entsprechenden Ansteuerung 744 bis 751 als erste Stufe 781 bezeichnet. Das LED-Segment umfassend das Modul 709 sowie die LEDs 732 und 733 mit der entsprechenden Ansteuerung 734 bis 741 wird als zweite Stufe 782 bezeichnet. Das LED-Segment umfassend das Modul 708 sowie die LEDs 722 und 723 mit der entsprechenden Ansteuerung 724 bis 731 wird als dritte Stufe 783 bezeichnet.

Das LED-Segment umfassend das Modul 707 sowie die LEDs 712 und 713 mit der entsprechenden Ansteuerung 714 bis 721 wird als vierte Stufe 784 bezeichnet.

Der Widerstand 750 ist in Kombination mit dem Kondensator 744 so ausgelegt, dass der Kondensator 744 auch während der längsten zu erwartenden Einschaltphase des Transistors 747 nicht vollständig entladen wird. Die Spannungsquelle 754 gibt einen Spannungsoffset als minimale Spannung, z.B. in Höhe von 6V, vor, die bei dem Transistor 752 nicht unterschritten werden soll. Der Transistor 749 vergleicht die Spannung von 6V der Spannungsquelle 754 mit der Spannung an dem Knoten 764. Sobald die Spannung am Knoten 764 kleiner wird als die Spannung der Spannungsquelle 754, so wird der Transistor 749 leitend. Sobald der Transistor 749 leitend wird, fängt auch der Transistor 747 an zu leiten. Wird der Transistor 747 leitend, so werden das Modul 710 und die LEDs 742 und 743 überbrückt ("kurzgeschlossen"). Dies verschiebt auch die Arbeitspunkte der verbleibenden Ansteuereinheiten für die anderen LEDs.

Hierbei sei angemerkt, dass die in Reihe geschalteten LEDs pro Stufe ein LED-Segment darstellen. Jedes LED-Segment wird über einen separaten Treiber angesteuert, der im Beispiel von Fig.7 insbesondere die beiden Transistoren sowie den beschriebenen Spitzenwertdetektor aufweist. Die Ansteuerung der Treiber erfolgt abhängig vom Momentanwert der gleichgerichteten Netzspannung zwischen den Knoten 703 und 704 durch die von der Spannungsquelle 754 bereitgestellte Schwellenspannung.

In Fig.7 wird die Spannungsquelle 754 als gemeinsame Spannungsquelle für die mehreren Ansteuereinheiten der LED-Segmente verwendet. Optional können auch mehrere Spannungsquellen vorgesehen sein, z.B. eine Spannungsquelle für jede Ansteuereinheit des LED-Segments.

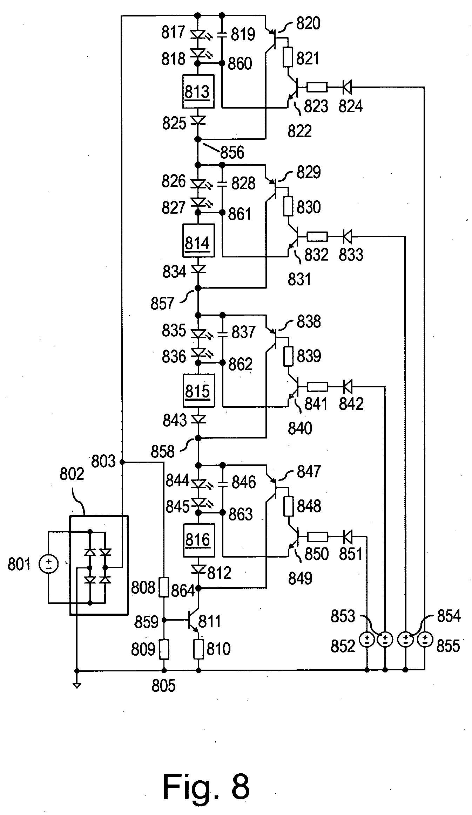

**Fig.8** zeigt eine alternative Schaltungsanordnung, die im Wesentlichen auf der Schaltung gemäß Fig.7 basiert und mehrere Spannungsquellen vorsieht, die zur Ansteuerung der einzelnen LED-Segmente einsetzbar sind.

Eine Netzwechselspannung 801 ist über einen Gleichrichter 802 mit zwei Knoten 803 und 805 verbunden. Der Knoten 803 ist über einen Widerstand 808 mit einem Knoten 859 verbunden. Der Knoten 859 ist über einen Widerstand 809 mit dem Knoten 805 verbunden. Der Knoten 859 ist mit der Basis eines npn-Transistors 811 verbunden. Der Emitter des Transistors 811 ist über einen Widerstand 810 mit dem Knoten 805 verbunden. Der Knoten 803 ist über eine Serienschaltung aus einer LED 817 und einer LED 818 mit einem Knoten 860 verbunden. Der Knoten 860 ist über eine Serienschaltung aus einem Modul 813 und einer Diode 825 mit einem Knoten 856 verbunden, wobei die Kathode der Diode 825 in Richtung des Knotens 856 zeigt. Der Knoten 803 ist über einen Kondensator 819 mit dem Knoten 860 verbunden. Der Knoten 803 ist mit dem Emitter eines pnp-Transistors 820 verbunden. Der Kollektor des Transistors 820 ist mit dem Knoten 856 verbunden. Die Basis des Transistors 820 ist über einen Widerstand 821 mit dem Kollektor eines npn-Transistors 822 verbunden. Der Emitter des Transistors 822 ist mit dem Knoten 860 verbunden. Die Basis des Transistors 822 ist über eine Serienschaltung aus einem Widerstand 823 und einer Diode 824 sowie einer Spannungsquelle 855 mit dem Knoten 805 verbunden, wobei die Kathode der Diode 824 in Richtung der Basis des Transistors 822 zeigt.

Der Knoten 856 ist über eine Reihenschaltung aus einer LED 826 und einer LED 827 mit einem Knoten 861 verbunden. Der Knoten 861 ist über eine Reihenschaltung aus einem Modul 814 und einer Diode 834 mit einem Knoten 857 verbunden, wobei die Kathode der Diode 834 in Richtung des Knotens 857 zeigt. Der Knoten 856 ist über einen Kondensator 828 mit dem Knoten 861 verbunden. Der Knoten 856 ist mit dem Emitter eines pnp-Transistors 829 verbunden. Der Kollektor des Transistors 829 ist mit dem Knoten 857 verbunden. Die Basis des Transistors 829 ist über einen Widerstand 830 mit dem Kollektor eines npn-Transistors 831 verbunden. Der Emitter des Transistors 831 ist mit dem Knoten 861 verbunden. Die Basis des Transistors 831 ist über eine Reihenschaltung aus einem Widerstand 832, einer Diode 833 und einer Spannungsquelle 854 mit dem Knoten 805 verbunden, wobei die Kathode der Diode 833 in Richtung der Basis des Transistors 831 zeigt.

Der Knoten 857 ist über eine Reihenschaltung aus einer LED 835 und einer LED 836 mit einem Knoten 862 verbunden. Der Knoten 862 ist über ein Modul 815, das mit einer Diode 843 in Reihe geschaltet ist, mit einem Knoten 858 verbunden, wobei die Kathode der Diode 843 in Richtung des Knotens 858 zeigt. Der Knoten 857 ist über einen Kondensator 837 mit dem Knoten 862 verbunden. Der Knoten 857 ist mit dem Emitter eines pnp-Transistors 838 verbunden. Der Kollektor des Transistors 838 ist mit dem Knoten 858 verbunden. Die Basis des Transistors 838 ist über einen Widerstand 839 mit dem Kollektor eines npn-Transistors 840 verbunden. Der Emitter des Transistors 840 ist mit dem Knoten 862 verbunden. Die Basis des Transistors 840 ist über eine Reihenschaltung aus einem Widerstand 841, einer Diode 842 und einer Spannungsquelle 853 mit dem Knoten 805 verbunden, wobei die Kathode der Diode 842 in Richtung der Basis des Transistors 840 zeigt.

Hierbei sei angemerkt, dass die Anzahl der Dioden 817, 818, die parallel zu dem Kondensator 819 (entsprechend in den anderen Segmenten) angeordnet sind, nur beispielhaft zwei beträgt. Es sind auch andere (z.B. auch unterschiedliche) Anzahlen von Dioden pro Segment möglich.

Der Knoten 858 ist über eine Reihenschaltung aus einer LED 844 und einer LED 845 mit einem Knoten 863 verbunden. Der Knoten 863 ist über ein Modul 816, das mit einer Diode 812 in Reihe geschaltet ist, mit einem Knoten 864 verbunden, wobei die Kathode der Diode 812 in Richtung des Knotens 864 zeigt. Der Knoten 858 ist über einen Kondensator 846 mit dem Knoten 863 verbunden. Der Knoten 858 ist mit dem Emitter eines pnp-Transistors 847 verbunden. Der Kollektor des Transistors 847 ist mit dem Knoten 864 verbunden. Die Basis des Transistors 847 ist über einen Widerstand 848 mit dem Kollektor eines npn-Transistors 849 verbunden. Der Emitter des Transistors 849 ist mit dem Knoten 863 verbunden. Die Basis des Transistors 849 ist über eine Serienschaltung aus einem Widerstand 850, einer Diode 851 und einer Spannungsquelle 852 mit dem Knoten 805 verbunden, wobei die Kathode der Diode 851 in Richtung der Basis des Transistors 849 zeigt.

Der Knoten 864 ist mit dem Kollektor des Transistors 811 verbunden.

Die Module 813, 814, 815 und 816 weisen jeweils eine Reihenschaltung aus LEDs auf. Die Reihenschaltungen aus LEDs sind pro Modul insbesondere unterschiedlich ausgeführt, so dass an jedem der Module 813 bis 816 unterschiedliche Spannungen abfallen. Beispielsweise können die Module 813 bis 816 derart ausgeführt sein, dass die folgenden Spannungen abfallen:

- an dem Modul 813: 150V,
- an dem Modul 814: 70V,
- an dem Modul 815: 30V und
- an dem Modul 816: 10V.

Im Hinblick auf Fig.8 sei angemerkt, dass die Kathoden der LEDs jeweils in Richtung des Knotens 805 ausgerichtet sind.

Beispielhaft weist die in Fig.8 dargestellte Schaltung die folgenden Bauteile bzw. Dimensionierungen auf (Widerstände in Ohm, Kondensatoren in Farad): R_808=200k; R_809=3,3k; R_810=100; R_821=R_830=R_839=R_848=10k; R_823=R_832=R_841=R_850=1M; C_819=C_828=C_837=C_846=1μ.

Die vorliegende Betriebsschaltung für LEDs weist eine hohe Effizienz auf und kann mit geringen Kosten hergestellt werden. Vorteilhaft ist es möglich, die elektrische Leistung gleichmäßig bzw. mit einer hohen Gleichmäßigkeit über die LED-Segmente zu verteilen. Optional kann die Leistungsverteilung entlang der LED-Kette gesteuert werden. Die vorgestellte Lösung erlaubt weiterhin einen Powerfaktor nahe 1,0 und damit geringe bzw. gut kontrollierbare Oberwellen. Die Schaltung ist zentral dimmbar, z.B. über einen einstellbaren Linearregler. Ein weiterer Vorteil ist der geringe Bauraum, da keine magnetischen Komponenten (Drosseln o.ä.) benötigt werden. Auch hieraus folgt eine gute elektromagnetische Verträglichkeit.

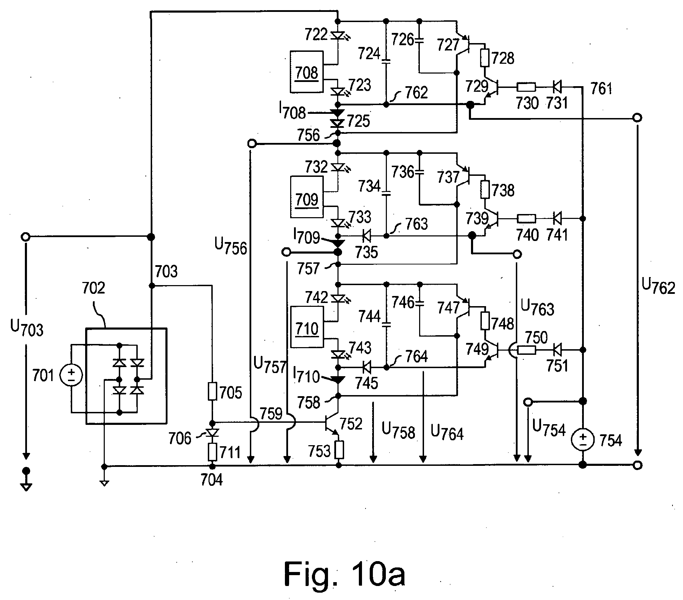

Im Folgenden wird die Arbeitsweise der erfindungsgemäßen Schaltung an einer dreistufigen Schaltung, welche an die Schaltung der Fig. 7 angelehnt ist, beschrieben. Gemäß der Fig. 10a sind also drei Stufen 781, 782, 783 in einer Reihenschaltung angeordnet. Die "unterste" Stufe 781 ist einem Bezugspunkt 704 der Schaltung am nächsten angeordnet, d.h. sie weist gegenüber dem Bezugspunkt den geringsten elektrischen Potentialunterschied auf.

Die in der Reihenschaltung als nächstes kommende Stufe 782 ist sozusagen "oberhalb" der untersten Stufe 781 angeordnet und weist gegenüber der Stufe 781 ein höheres elektrisches Potential auf, und damit einen größeren Potentialunterschied gegenüber dem Bezugspunkt 704. Die benachbart angeordneten Stufen unterscheiden sich also hauptsächlich anhand des Potentials, wobei die per Definition "weiter unten" liegenden Stufen ein geringeres Potential gegenüber dem Bezugspunkt aufweisen als die per Definition "weiter oben" liegenden Stufen.

Die Stufe 781, die dem Bezugspunkt 704 der Schaltung am nächsten angeordnet ist (also die unterste Stufe), weist die kleinste Vorwärtsspannung der Schaltung auf. In einer Ausführungsform weist die als nächstes kommende Stufe 782, die gegenüber dem Bezugspunkt eine größere Potentialdifferenz hat (also die weiter oben liegende Stufe), eine größere Vorwärtsspannung auf. Dies führt sich für die folgenden Stufen in dieser Ausführungsform fort.

In einer weiteren Ausführungsform verdoppeln sich die Vorwärtsspannungen der aufeinanderfolgenden Stufen jeweils ausgehend von der untersten Stufe, die gegenüber dem Bezugspunkt den geringsten elektrischen Potentialunterschied aufweist.

In einer Ausführungsform sind alle Summenspannungen, die sich aus Teilmengen der Vorwärtsspannungen der Segmente bilden lassen, unterschiedlich. Als Teilmenge der Vorwärtsspannungen kann hierbei jede Summe aus den Vorwärtsspannungen mindestens zweier Segmente angesehen werden, die jedoch nicht direkt in der Reihenschaltung benachbart angeordnet sein müssen. Die Gesamtsumme aller Segmente ist keine Teilmenge, und repräsentiert die höchstmögliche Summenspannung. Die Summenspannungen sollten dabei nicht einer Vorwärtsspannung eines Segmentes entsprechen.

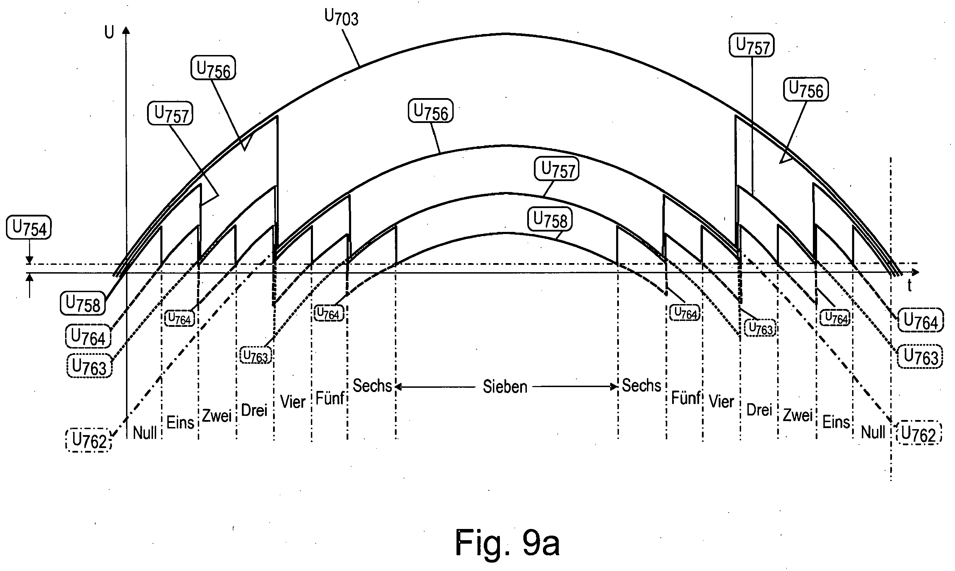

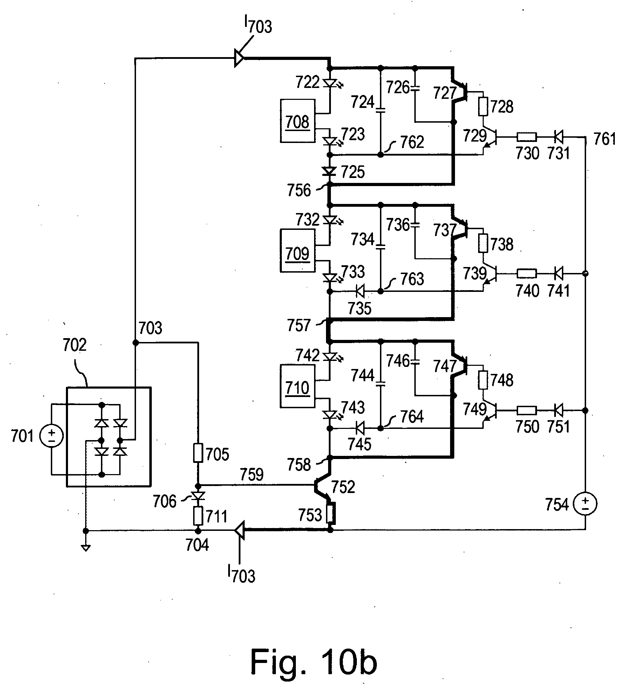

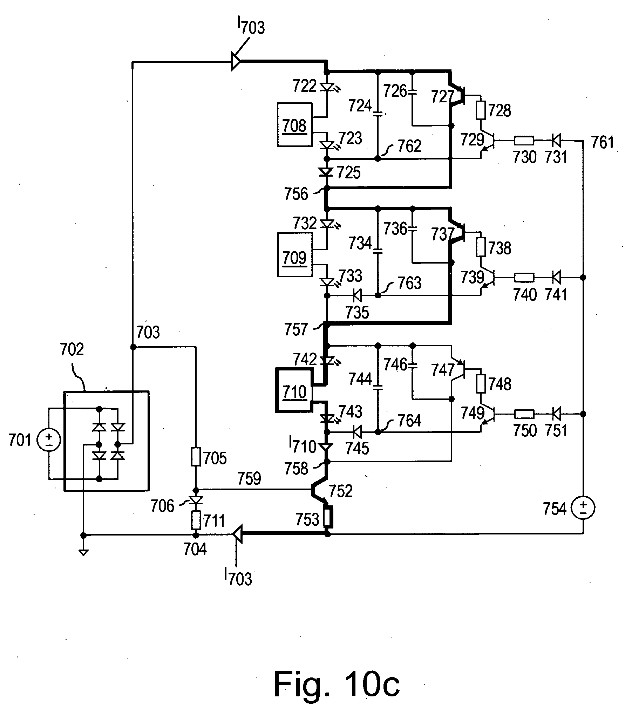

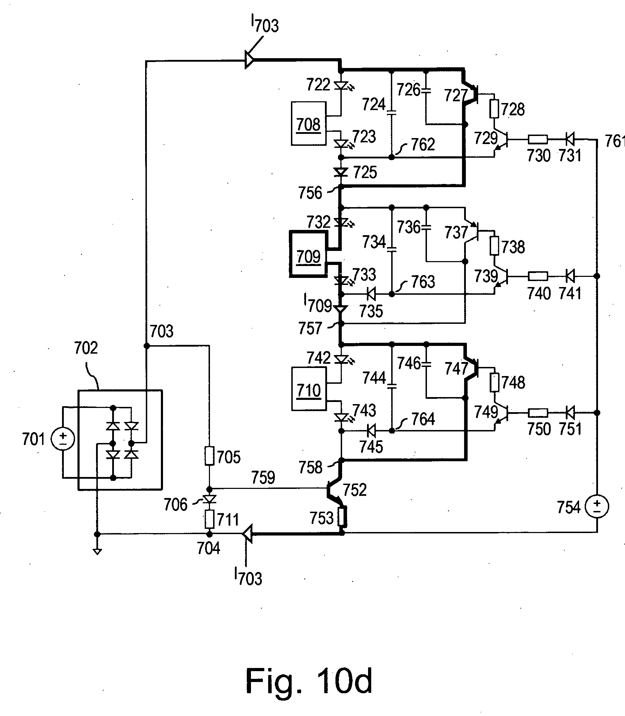

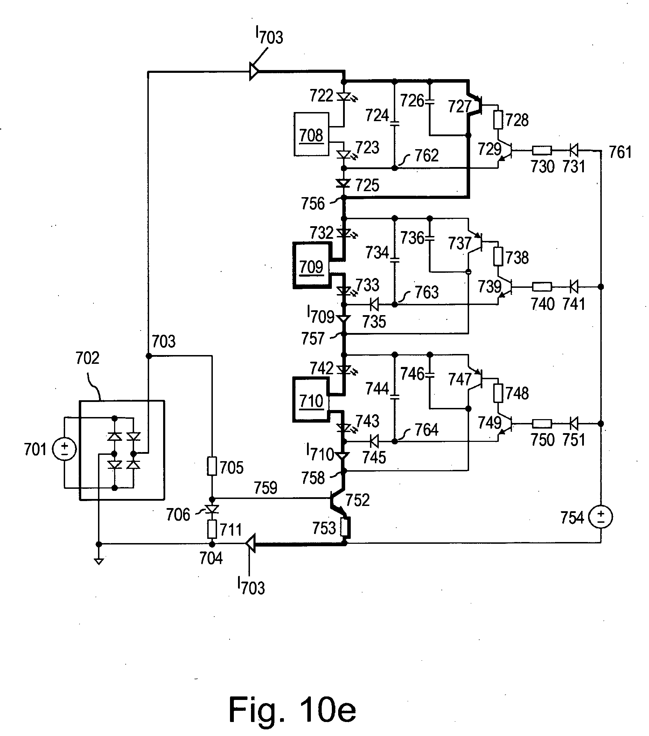

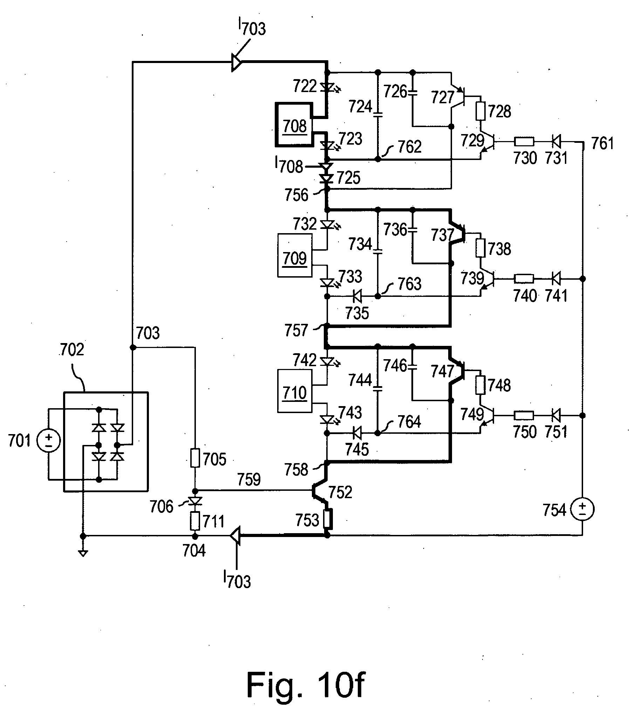

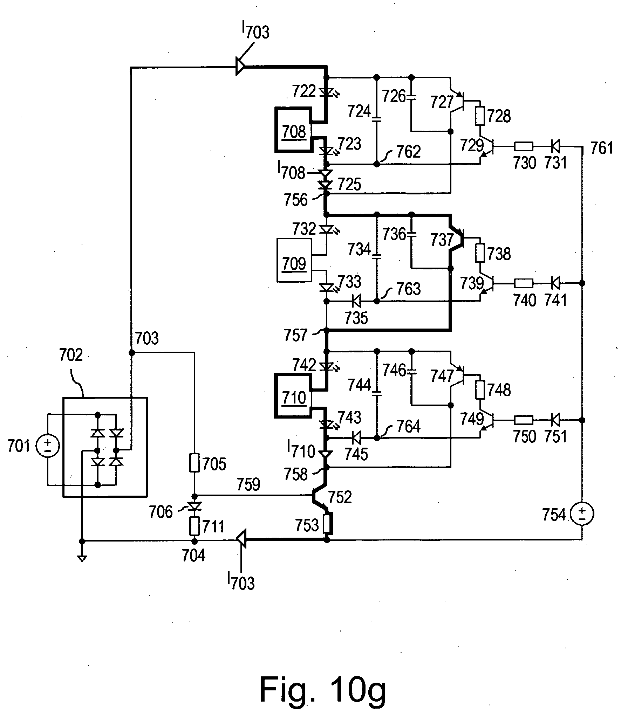

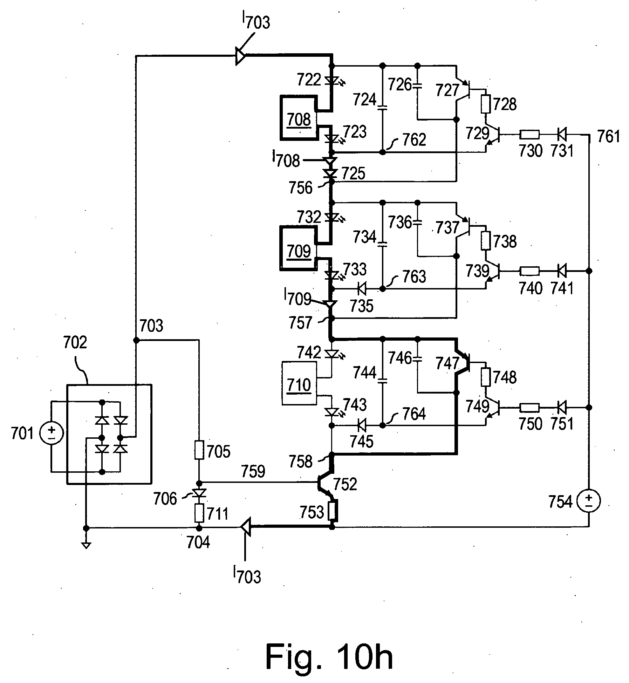

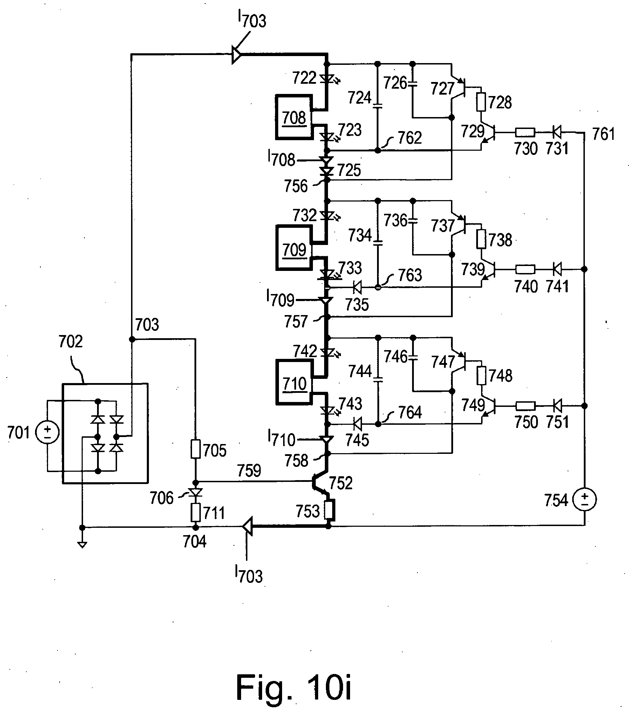

Fig. 9a zeigt eine Netzhalbwelle als gleichgerichtete Netzspannung $U_{703}$ mit weiteren Spannungen, die an den entsprechenden Knotenpunkten in der Fig. 7 beziehungsweise Fig. 10 a anliegen. Die gleichgerichtete Netzspannung liegt am Knoten 703 an. $I_{703}$ ist der Strom durch die LEDs aufgrund der treibenden gleichgerichteten Netzspannung $U_{703}$, ist also im wesentlichen der Netzstrom. Alle Spannungen werden gegenüber dem Knoten 704 gemessen, der somit der Bezugspunkt der Schaltung ist.

Die Spannung $U_{758}$ in Fig. 9a beziehungsweise Fig. 10a entspricht der Spannung am Knoten 758. Die Spannung $U_{764}$ in Fig. 9a beziehungsweise Fig. 10a entspricht der Spannung am Knoten 764, der gleichzeitig der Fußpunkt der ersten Stufe ist.

Die Spannung $U_{757}$ in Fig. 9a beziehungsweise Fig. 10a entspricht der Spannung am Knoten 757. Die Spannung $U_{763}$ in Fig. 9a beziehungsweise Fig. 10a entspricht der Spannung am Knoten 763, der gleichzeitig der Fußpunkt der zweiten Stufe ist.

Die Spannung $U_{756}$ in Fig. 9a beziehungsweise Fig. 10a entspricht der Spannung am Knoten 756. Die Spannung $U_{762}$ in Fig. 9a beziehungsweise Fig. 10a entspricht der Spannung am Knoten 762, der gleichzeitig der Fußpunkt der dritten Stufe ist.

Die Spannung $U_{754}$ entspricht der Spannung der Spannungsquelle 754, und ist hier die Schwellenspannung, anhand der geschaltet wird.

Die Funktionsweise der Schaltung wird nun in einzelnen Phasen von Null bis Sieben beschrieben, deren Stromflüsse in den Figuren 10b bis 10i dargestellt sind. Die Anzahl der Phasen ergibt sich aus der Anzahl der Stufen der Schaltung. Bei drei Stufen arbeitet die Schaltung mit maximal $2^3 = 8$ Phasen. Bei N Stufen arbeitet die Schaltung somit mit maximal $2^N$ Phasen.

Die einzelnen Phasen Null bis Sieben sind in Fig. 9a unter dem zeitlichen Verlauf der gleichgerichteten Netzspannung $U_{703}$ über der Zeit t aufgetragen.

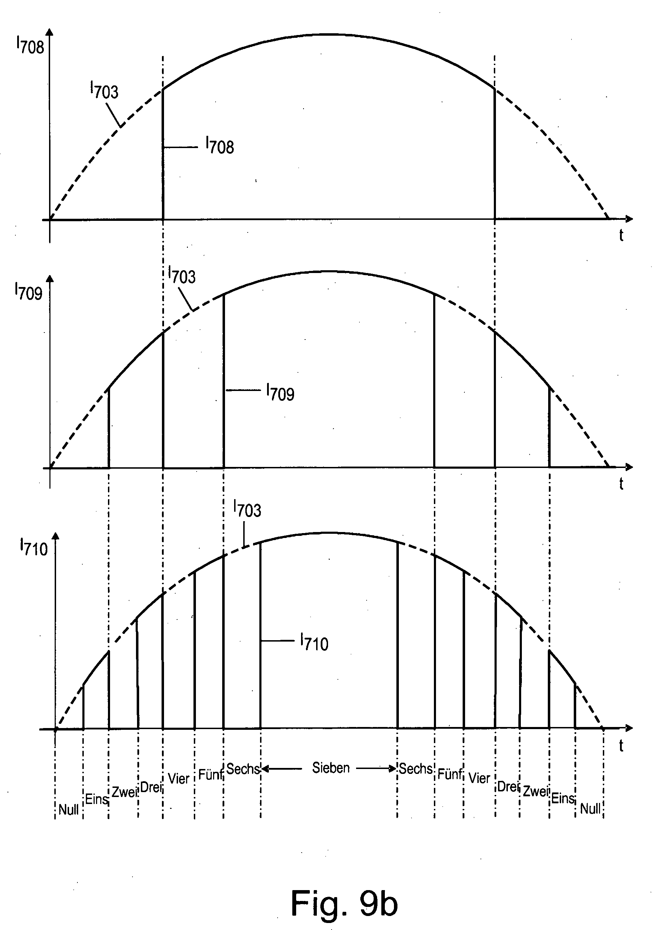

In Fig. 9b sind die Ströme $I_{708}$, $I_{709}$, $I_{710}$ durch die einzelnen LED-Segmente der Stufen 783, 782, 781 dargestellt. Es ist gut zu sehen, dass der Gesamtstrom $I_{703}$ auf die einzelnen LED-Segmente gemäß den Phasen aufgeteilt, also quasi zerhackt" wird. Die Zusammenschau, also die Einhüllende dieser Ströme, ergibt dann den gestrichelt gezeichneten sinusförmigen Gesamtstrom mit Ausnahme der Phase Null, in der kein LED-Segment leuchtet, und ein Strom durch den Transistor 752 erzeugt wird, um eine entsprechend gute Leistungsfaktorkorrektur zu erreichen. Durch den der Netzspannung folgenden sinusförmigen Verlauf des Stromes $I_{703}$ ist ein sehr guter Leistungsfaktor der Schaltung gegeben.

Der Stromverlauf in der Phase Null ist in Fig. 10b dargestellt. Die Bedingung für Phase Null ist, dass alle Fußpunktspannungen $U_{764}$, $U_{763}$, $U_{762}$ der einzelnen Stufen kleiner sind als die Schwellenspannung $U_{754}$. Die Schaltung sollte so dimensioniert sein, dass die Schwellenspannung $U_{754}$ kleiner ist als die Vorwärtsspannung der seriell geschalteten LEDs der ersten Stufe. In Phase Null sind alle Treibertransistoren 747, 737, 727 leitend, somit sind alle LEDs überbrückt, und keine der LEDs wird direkt vom Netzstrom $I_{703}$ versorgt. Dies folgt aus der geringen Momentanspannung der gleichgerichteten Netzspannung $U_{703}$. Phase Null tritt immer in unmittelbarer Umgebung des Netzspannungsnulldurchgangs auf. Obwohl in dieser Phase keine der vorhandenen LED vom Netzstrom I703 versorgt werden, fließt aufgrund des immer aktiven Stromreglers trotzdem ein kleiner Netzstrom proportional zur Netzspannung.

Zum besseren Verständnis wird im Folgenden die Arbeitsweise der Ansteuerschaltung der verschiedenen Stufen beschrieben.

Die elektronischen Kurzschluss-Schalter oder Treibertransistoren 747, 737, 727 werden von den elektronischen Vergleichs-Schaltern oder Vergleichstransistoren 749, 739, 729 ein- und ausgeschaltet. Die Vergleichstransistoren werden von den Kondensatoren 744, 734, 724 mit der nötigen Spannung versorgt. Weil alle Treibertransistoren leitend sind, sind die Fußpunktspannungen $U_{764}$, $U_{763}$ und $U_{762}$ der einzelnen Stufen 781, 782, 783 kleiner als die Schwellenspannung $U_{754}$. Die Schwellenspannung $U_{754}$ wird über Dioden 751, 741, 731, die als Messdioden arbeiten, und Basiswiderstände 750, 740, 730 an die Basen der Vergleichstransistoren 749, 739, 729 angelegt. Deshalb sind alle Vergleichstransistoren leitend, und schalten über die Kollektorwiderstände 748, 738, 728 auch die Treibertransistoren 747, 737, 727 leitend.

Der Stromverlauf in der Phase Eins ist in Fig. 10c dargestellt. Die Bedingung für Phase Eins ist, dass die Fußpunktspannung $U_{764}$ der ersten Stufe 781 größer als die Schwellenspannung $U_{754}$ ist, und dass die restlichen Fußpunktspannungen $U_{763}$ und $U_{762}$ der anderen Stufen kleiner sind als die Schwellenspannung $U_{754}$. In Phase Eins sind die Treibertransistoren 737, 727 leitend, somit sind die LEDs der zweiten Stufe 782 und der dritten Stufe 783 überbrückt, und keine dieser LEDs wird direkt vom Strom $I_{703}$ versorgt. Weil der Vergleichstransistor 749 der ersten Stufe 781 aufgrund obiger Bedingung beim Übergang von Phase Null auf Phase Eins abgeschaltet hat, wird auch der Treibertransistor 747 hochohmig und lässt den Strom $I_{703}$ der gleichgerichteten Netzspannung $U_{703}$ durch die LEDs der ersten Stufe fließen. Dieses Hochohmigwerden wird im Folgenden auch als Freischalten des dem jeweiligen Treibertransistor zugeordneten Segmentes bezeichnet. Gleichzeitig wird der Kondensator 744 auf die aktuelle Vorwärtsspannung der LEDs der ersten Stufe 781 über eine Diode 745, die als Entkoppeldiode arbeitet, nachgeladen, und die Diode 751 schaltet ab. Aufgrund der höheren Vorwärtsspannung der zweiten Stufe 782 und der dritten Stufe 783 sind die dazugehörigen Fußpunktspannungen $U_{763}$ und $U_{762}$ immer noch kleiner als die Schwellenspannung $U_{704}$, weshalb die dazugehörigen Vergleichstransistoren 739 und 729 unbeeinflusst von der Schaltaktion der ersten Stufe weiterhin leitfähig bleiben und damit auch die zugehörigen Treibertransistoren 737, 727 eingeschaltet lassen. Die Schaltaktion der ersten Stufe, insbesondere der Spannungssprung zwischen Phasen Null und Eins der Spannung $U_{758}$ nach unten auf etwa den Wert der Schwellenspannung $U_{754}$, wird von dem Transistor 752, der als Stromregeltransistor im Linearbetrieb arbeitet, aufgefangen.

Der Stromverlauf in der Phase Zwei ist in Fig. 10d dargestellt. Die Bedingung für Phase Zwei ist, dass die Fußpunktspannung $U_{763}$ der zweiten Stufe 782 größer als die Schwellenspannung $U_{754}$ ist, und dass die restlichen Fußpunktspannungen $U_{764}$ und $U_{762}$ der anderen Stufen kleiner sind als die Schwellenspannung $U_{754}$. In Phase Zwei sind die Treibertransistoren 747, 727 leitend, somit sind die LEDs der ersten Stufe 781 und der dritten Stufe 783 überbrückt, und keine dieser LEDs wird direkt vom Strom $I_{703}$ versorgt. Phase Eins geht in Phase Zwei über, wenn die Fußpunktspannung $U_{763}$ der zweiten Stufe 782 größer wird als die Schwellenspannung $U_{754}$. Dadurch schalten Diode 741 und Vergleichstransistor 739 ab, weshalb auch der Treibertransistor 737 hochohmig wird und den Strom $I_{703}$ die LEDs der zweiten Stufe versorgen lässt. Gleichzeitig wird der Kondensator 734 auf die aktuelle Vorwärtsspannung der LEDs der zweiten Stufe 782 über eine Diode 735, die als Entkoppeldiode arbeitet, nachgeladen. Durch das Abschalten des Treibertransistors 737 springt die Fußpunktspannung $U_{764}$ der ersten Stufe 781 unter die Schwellenspannung $U_{754}$, wodurch der Vergleichstransistor 749 der ersten Stufe 781 wieder einschalten. Damit wird auch der dazugehörige Treibertransistor 747 leitend und übernimmt den Strom $I_{703}$. Aufgrund der höheren Vorwärtsspannung der dritten Stufe 783 im Vergleich zur zweiten Stufe 782 ist die dazugehörige Fußpunktspannung $U_{762}$ immer noch kleiner als die Schwellenspannung $U_{704}$, weshalb der dazugehörige Vergleichstransistor 729 unbeeinflusst von der Schaltaktion der ersten und der zweiten Stufe weiterhin leitfähig bleibt und damit den zugehörigen Treibertransistor 727 eingeschaltet lässt. Die Schaltaktionen der ersten und der zweiten Stufe, insbesondere der Spannungssprung zwischen Phasen Eins und Zwei der Spannung $U_{758}$ nach unten auf etwa den Wert der Schwellenspannung $U_{754}$, wird von dem Transistor 752, der als Stromregeltransistor im Linearbetrieb arbeitet, aufgefangen. Die Schaltaktion der zweiten Stufe bewirkt eine gegenläufige Schaltaktion der ersten Stufe mit der kleineren Vorwärtsspannung der zugehörigen LEDs, die zwischen Bezugspunkt 704 und der zweiten Stufe liegt.

Der Stromverlauf in der Phase Drei ist in Fig. 10e dargestellt. Die Bedingung für Phase Drei ist, dass die Fußpunktspannung $U_{764}$ der ersten Stufe 781 und die Fußpunktspannung $U_{763}$ der zweiten Stufe 782 größer als die Schwellenspannung $U_{754}$ sind, und dass letztlich nur noch die Fußpunktspannung $U_{762}$ der dritten Stufe kleiner ist als die Schwellenspannung $U_{754}$. In Phase Drei ist einzig der Treibertransistor 727 leitend, somit sind die LEDs der dritten Stufe 783 überbrückt, und keine dieser LEDs wird direkt vom Strom $I_{703}$ versorgt. Phase Zwei geht in Phase Drei über, wenn die Fußpunktspannung $U_{764}$ der ersten Stufe 781 größer wird als die Schwellenspannung $U_{754}$. Durch das dadurch bewirkte Abschalten des Treibertransistors 747 springt die Spannung $U_{758}$ auf etwa den Wert der Schwellenspannung $U_{754}$, welcher Sprung der Spannung $U_{758}$ von dem Transistor 752 aufgefangen wird. Gleichzeitig wird der Kondensator 744 auf die aktuelle Vorwärtsspannung der LEDs der ersten Stufe 781 über eine Diode 745, die als Entkoppeldiode arbeitet, erneut nachgeladen.

Der Stromverlauf in der Phase Vier ist in Fig. 10f dargestellt. Die Bedingung für Phase Vier ist, dass schließlich

auch die Fußpunktspannung $U_{762}$ der dritten Stufe 783 mit der höchsten Vorwärtsspannung der LEDs größer als die Schwellenspannung $U_{754}$ ist, und dass die restlichen Fußpunktspannungen $U_{764}$ und $U_{763}$ der anderen Stufen kleiner sind als die Schwellenspannung $U_{754}$. In Phase Vier sind die Treibertransistoren 747, 737 leitend, somit sind die LEDs der ersten Stufe 781 und der zweiten Stufe 782 überbrückt, und keine dieser LEDs wird direkt vom Strom $I_{703}$ versorgt. Phase Drei geht in Phase Vier über, wenn die Fußpunktspannung $U_{762}$ der dritten Stufe 783 größer wird als die Schwellenspannung $U_{754}$. Dadurch schalten Diode 731 und Vergleichstransistor 729 ab, weshalb auch der Treibertransistor 727 hochohmig wird und den Strom $I_{703}$ die LEDs der dritten Stufe versorgen lässt. Gleichzeitig wird der Pufferkondensator 724 auf die aktuelle Vorwärtsspannung der LEDs der dritten Stufe 783 über eine Entkoppeldiode 725, nachgeladen. Durch das Abschalten des Treibertransistors 727 springen die Fußpunktspannungen $U_{764}$ der ersten Stufe 781 und $U_{763}$ der zweiten Stufe 782 unter die Schwellenspannung $U_{754}$, wodurch die Vergleichstransistoren 749 und 739 beider Stufen wieder einschalten. Damit werden auch die zugehörigen Treibertransistoren 747 und 737 wieder leitend und übernehmen den Strom $I_{703}$. Die Schaltaktionen aller drei Stufen, insbesondere der Spannungssprung zwischen Phasen Drei und Vier der Spannung $U_{758}$, wird von dem Transistor 752 aufgefangen. Die Schaltaktion der dritten Stufe bewirkt eine gegenläufige Schaltaktion der in Richtung Bezugspunkt 704 liegenden ersten und zweiten Stufe mit jeweils kleineren Vorwärtsspannungen der zugehörigen LEDs.

Der Stromverlauf in der Phase Fünf ist in Fig. 10f dargestellt. Die Bedingung für Phase Fünf ist, dass die Fußpunktspannung $U_{764}$ der ersten Stufe 781 und die Fußpunktspannung $U_{762}$ der dritten Stufe 783 größer als die Schwellenspannung $U_{754}$ sind, und dass einzig die Fußpunktspannung $U_{763}$ der zweiten Stufe kleiner ist als die Schwellenspannung $U_{754}$. In Phase Fünf ist nur der Treibertransistor 737 leitend, somit sind die LEDs der zweiten Stufe 782 überbrückt, und keine dieser LEDs wird direkt vom Strom $I_{703}$ versorgt. Phase Vier geht in Phase Fünf über, wenn die Fußpunktspannung $U_{764}$ der ersten Stufe 781 größer wird als die Schwellenspannung $U_{754}$. Durch das dadurch bewirkte Abschalten des Treibertransistors 747 springt die Spannung $U_{758}$ herunter auf etwa den Wert der Schwellenspannung $U_{754}$, welcher Sprung der Spannung $U_{758}$ von dem Transistor 752 aufgefangen wird. Gleichzeitig wird der Kondensator 744 auf die aktuelle Vorwärtsspannung der LEDs der ersten Stufe 781 über eine Diode 745, die als Entkoppeldiode arbeitet, erneut nachgeladen.

Der Stromverlauf in der Phase Sechs ist in Fig. 10h dargestellt. Die Bedingung für Phase Sechs ist, dass die Fußpunktspannungen $U_{763}$ der zweiten Stufe 782 und $U_{762}$ der dritten Stufe 783 größer als die Schwellenspannung $U_{754}$ sind, und dass einzig die Fußpunktspannung $U_{764}$ der ersten Stufe 781 kleiner ist als die Schwellenspannung $U_{754}$. In Phase Sechs ist der Treibertransistor 747 leitend, somit sind die LEDs der ersten Stufe 781 überbrückt, und keine dieser LEDs wird direkt vom Strom $I_{703}$ versorgt. Phase Fünf geht in Phase Sechs über, wenn die Fußpunktspannung $U_{763}$ der zweiten Stufe 782 größer wird als die Schwellenspannung $U_{754}$. Dadurch schalten Diode 741 und Vergleichstransistor 739 ab, weshalb auch der Treibertransistor 737 hochohmig wird und den Strom $I_{703}$ die LEDs der zweiten Stufe versorgen lässt. Gleichzeitig wird der Kondensator 734 auf die aktuelle Vorwärtsspannung der LEDs der zweiten Stufe 782 über eine Diode 735, die als Entkoppeldiode arbeitet, nachgeladen. Durch das Abschalten des Treibertransistors 737 springt die Fußpunktspannung $U_{764}$ der ersten Stufe 781 unter die Schwellenspannung $U_{754}$, wodurch der Vergleichstransistor 749 der ersten Stufe 781 wieder einschaltet. Damit wird auch Treibertransistor 747 leitend und übernimmt den Strom $I_{703}$. Da der die LED versorgende Strom $I_{703}$ proportional zur gleichgerichteten Netzspannung $U_{703}$ zunimmt, tritt am Ende von Phase Sechs der höchste Stromwert auf, der von einem der drei Treibertransistoren geführt werden muss. Die Schaltaktionen der ersten und der zweiten Stufe, insbesondere der Spannungssprung zwischen Phasen Fünf und Sechs der Spannung $U_{758}$, wird von dem Transistor 752 aufgefangen. Die Schaltaktion der zweiten Stufe bewirkt eine gegenläufige Schaltaktion der ersten Stufe mit der kleineren Vorwärtsspannung der zugehörigen LEDs, die zwischen der zweiten Stufe und Bezugspunkt 704 liegt.

Der Stromverlauf in der Phase Sieben ist in Fig. 10i dargestellt. Die Bedingung für Phase Sieben ist, dass alle Fußpunktspannungen $U_{764}$, $U_{763}$, $U_{762}$ aller Stufen größer als die Schwellenspannung $U_{754}$ sind. In Phase Sieben ist keiner der Treibertransistoren mehr leitend, somit sind die LEDs aller Stufen direkt vom Strom $I_{703}$ versorgt. Phase Sechs geht in Phase Sieben über, wenn die Fußpunktspannung $U_{764}$ der ersten Stufe 781 größer wird als die Schwellenspannung $U_{754}$. Durch das dadurch bewirkte Abschalten des Treibertransistors 747 springt die Spannung $U_{758}$ hinunter auf etwa den Wert der Schwellenspannung $U_{754}$, welcher Sprung der Spannung $U_{758}$ von dem Transistor 752 aufgefangen wird. Gleichzeitig wird der Kondensator 744 auf die aktuelle Vorwärtsspannung der LEDs der ersten Stufe 781 über eine Diode 745, die als Entkoppeldiode arbeitet, nachgeladen. Da dies in einer Netz-Viertelperiode viermal geschieht, kann Kondensator 744 kleiner dimensioniert sein als Kondensator 734, der im gleichen Zeitintervall nur zweimal nachgeladen wird, und der wiederum kann kleiner dimensioniert sein als Pufferkondensator 724, der im gleichen Zeitabschnitt nur einmal nachgeladen wird.

Bei wieder kleiner werdender gleichgerichteter Netzspannung $U_{703}$ werden die Phasen Null bis Sechs rückwärts in analoger Weise durchlaufen. Schaltkriterium ist hierbei, wenn entweder die Fußpunktspannung $U_{764}$ der ersten Stufe 781 oder die Fußpunktspannung $U_{763}$ der zweiten Stufe 782 unter die Schwellenspannung $U_{754}$ sinkt. Beim Übergang von Phase Vier auf Phase Drei sinkt die Fußpunktspannung $U_{762}$ der dritten Stufe 783 unter die Schwellenspannung $U_{754}$.

Bezugszeichenliste

| | |
|---|---|
| 101-103 | LED-Segment |
| 104 | Stromregler |
| 105 | Netzwechselspannung |
| 106 | Gleichrichter |
| $SW_1$ bis $SW_3$ | (elektronischer) Schalter |
| C1 bis C3 | Pufferkondensator |
| D1 bis D3 | (Entkoppel-)Diode |
| 301-302 | Knoten |
| 303 | Komparator |
| 304-307 | Widerstand |
| 308 | Komparator |
| 309-312 | Widerstand |
| 313 | Komparator |
| 314-317 | Widerstand |
| 401-403 | Spannungsquelle |
| 501 | Netzwechselspannung |
| 502 | Gleichrichter |
| 503-504 | Knoten |
| 505 | Diode |
| 506-507 | Widerstand |
| 508 | pnp-Transistor |
| 509 | Spannungsquelle |
| 510-517 | Widerstand |
| 518-521 | Modul (LED-Segment oder Teil eines LED-Segments) |
| 522a-522d | Modul (siehe Fig.6) |
| 523-528 | Anschlüsse des Moduls 522a-522d |
| 529-530 | Knoten |
| 531 | Widerstand |
| 601-603 | Diode |
| 604-605 | LED |
| 606 | Knoten |
| 607 | Mosfet |
| 608 | Widerstand |
| 609-610 | Kondensator |
| 611 | npn-Transistor |
| 612-613 | pnp-Transistor |
| 614-616 | Widerstand |
| 617 | npn-Transistor |
| 618 | Widerstand |
| 619 | npn-Transistor |
| 620 | Diode |
| 621 | Knoten |
| 701 | Netzwechselspannung |
| 702 | Gleichrichter |
| 703-704 | Knoten |
| 705 | Widerstand |
| 706 | Diode |
| 707-710 | Modul |
| 711 | Widerstand |
| 712-713 | LED |
| 714 | Pufferkondensator |
| 715 | Entkoppeldiode |
| 716 | Kondensator |
| 717 | pnp-Transistor |

| 718 | Widerstand |
| 719 | npn-Transistor |
| 720 | Widerstand |
| 721 | Diode |
| 722-723 | LED |
| 724 | Pufferkondensator |
| 725 | Entkoppeldiode |
| 726 | Kondensator |
| 727 | pnp-Transistor |
| 728 | Widerstand 729 npn-Transistor |
| 730 | Widerstand |
| 731 | Diode |
| 732-733 | LED |
| 734 | Kondensator |
| 735 | Diode |
| 736 | Kondensator |
| 737 | pnp-Transistor |
| 738 | Widerstand |
| 739 | npn-Transistor |
| 740 | Widerstand |
| 741 | Diode |
| 742-743 | LED |
| 744 | Kondensator |
| 745 | Diode |
| 746 | Kondensator |
| 747 | pnp-Transistor |
| 748 | Widerstand |
| 749 | npn-Transistor |
| 750 | Widerstand |
| 751 | Diode |
| 752 | npn-Transistor |
| 753 | Widerstand |
| 754 | Spannungsquelle |
| 755-764 | Knoten |
| 781-784 | Erste bis vierte Stufe |
| 801 | Netzwechselspannung |
| 802 | Gleichrichter |
| 803 | Knoten |
| 805 | Knoten |
| 808-810 | Widerstand |
| 811 | npn-Transistor |
| 812 | Diode |
| 813-816 | Modul |
| 817-818 | LED |
| 819 | Pufferkondensator |
| 820 | pnp-Transistor |
| 821 | Widerstand |
| 822 | npn-Transistor |
| 823 | Widerstand |
| 824-825 | Diode |
| 826-827 | LED |
| 828 | Pufferkondensator |
| 829 | pnp-Transistor |
| 830 | Widerstand |
| 831 | npn-Transistor |
| 832 | Widerstand |
| 833-834 | Diode |
| 835-836 | LED |

| 837 | Pufferkondensator |
| 838 | pnp-Transistor |
| 839 | Widerstand |
| 840 | npn-Transistor |
| 841 | Widerstand |
| 842-843 | Diode |
| 844-845 | LED |
| 846 | Pufferkondensator |
| 847 | pnp-Transistor |
| 848 | Widerstand |
| 849 | npn-Transistor |
| 850 | Widerstand |
| 851 | Diode |
| 852-855 | Spannungsquelle |
| 856-864 | Knoten |
| $U_{703}$ | Gleichgerichtete Netzspannung |
| $U_{756-758}$ | Knotenpunktspannungen |
| $U_{762-764}$ | Fußpunktspannungen der einzelnen Stufen |
| $U_{754}$ | Schwellenspannung |
| $I_{703}$ | Netzstrom |
| $I_{708-710}$ | Ströme durch die einzelnen LED-Segmente |

**Patentansprüche**

1. Schaltung zur Ansteuerung von Halbleiterleuchtelementen,

   - wobei die Schaltung von einer gleichgerichteten Netzspannung ($U_{703}$) versorgt wird,
   - mit mindestens zwei in Reihe geschalteten Segmenten (101, 102, 103), die jeweils ein oder mehrere in Reihe geschaltete Halbleiterleuchtelemente aufweisen,
   - wobei die Halbleiterleuchtelemente in zumindest zwei der Segmente unterschiedlich sind, wodurch sich unterschiedliche Vorwärtsspannungen der Segmente ergeben,
   - mit je einem Treiber zur Ansteuerung eines Segments, wobei der Treiber mindestens einen elektronischen Schalter (SW3, 717, 820, 727) aufweist, anhand dessen das dem Treiber zugeordnete Segment überbrückbar ist,

   **dadurch gekennzeichnet dass** die Schaltung eingerichtet ist, anhand eines Momentanwertes der gleichgerichteten Netzspannung ($U_{703}$) sowie anhand des Überbrückungszustandes der dem Treiber benachbarten Segmente zu entscheiden, das dem Treiber zugeordnete Segment zu überbrücken.

2. Schaltung, nach Anspruch 1, wobei das Segment mit der geringeren Vorwärtsspannung innerhalb der Reihenschaltung näher an einem Bezugspunkt (302, 503, 704, 805) der Schaltung angeordnet ist.

3. Schaltung nach Anspruch 1 oder 2, wobei jeder Treiber einen Spitzenwertdetektor aufweist, der die aktuelle Vorwärtsspannung des Segmentes speichert.

4. Schaltung nach Anspruch 3, wobei jeder Treiber einen Fußpunkt aufweist, dessen Potential vom im Spitzenwertdetektor gespeicherten Wert der Vorwärtsspannung des Segmentes abhängt.

5. Schaltung nach Anspruch 4, bei der der Treiber ein Vergleichselement (303, 308, 313, 749, 849) umfasst, wodurch jeder Treiber das ihm zugeordnete Segment immer dann umschaltet, wenn die Potentialdifferenz zwischen Fußpunkt und einer in den Treiber eingegebenen Schwellenspannung (509, 754) ihr Vorzeichen ändert.

6. Schaltung nach Anspruch 4 oder 5, wobei jedem Treiber eine individuelle Schwellenspannung (401, 402, 403, 852, 853, 854, 855) zugeordnet ist.

7. Schaltung nach einem der vorhergehenden Ansprüche, bei der mindestens zwei der Segmente Halbleiterleuchtelemente aufweisen, die zumindest teilweise in ihren Vorwärtsspannungen, ihren Farben, ihren Größen, ihren Bauformen und/oder ihren Anzahlen unterschiedlich sind.

8. Schaltung nach einem der vorhergehenden Ansprüche, bei der die Vorwärtsspannungen aller Segmente unterschiedlich sind.

9. Schaltung nach Anspruch 8, bei der die Summen aller möglichen Kombinationen der Vorwärtsspannungen von Teilmengen aller Segmente und die Vorwärtsspannungen der einzelnen Segmente stets unterschiedliche Werte ergeben.

10. Schaltung nach Anspruch 8 oder 9, bei der die sich die Flussspannungen ($U_{f1}$, $U_{f2}$, $U_{f3}$) der in Reihe geschalteten Segmente (781, 782, 783, 784) ausgehend vom Segment (781) mit dem geringsten Potential bezogen auf den Bezugspunkt (704) jeweils verdoppeln.

11. Schaltung nach einem der vorhergehenden Ansprüche, bei der ein Umschalten eines Segmentes, welches gegenüber dem Bezugspunkt eine größere Potentialdifferenz aufweist, ein Umschalten mindestens eines Segmentes, welches gegenüber dem Bezugspunkt eine kleinere Potentialdifferenz aufweist, bewirkt.

12. Schaltung nach Anspruch 11, bei der ein Überbrücken eines Segmentes, welches gegenüber dem Bezugspunkt eine größere Potentialdifferenz aufweist, ein Freischalten des benachbarten Segmentes, welches gegenüber dem Bezugspunkt eine kleinere Potentialdifferenz aufweist, bewirkt und umgekehrt.

13. Schaltung nach einem der vorhergehenden Ansprüche, bei der die Segmente mit einem Stromregler (104) in Reihe geschaltet sind.

14. Schaltung nach Anspruch 13, bei der der Stromregler (104) ein resistives Element oder einen Linearregler (508, 752, 811) aufweist.

15. Schaltung nach einem der vorhergehenden Ansprüche, bei der der elektronische Schalter des Treibers mit der größten Potentialdifferenz zum Bezugspunkt (704) mit einer Schalthäufigkeit aktiv ist, die der doppelten Netzfrequenz entspricht, und bei der elektronische Schalter weiterer Stufen mit einer Schalthäufigkeit aktiv sind, die ein Vielfaches der doppelten Netzfrequenz ist.

16. Schaltung nach einem der vorhergehenden Ansprüche, wobei parallel zu Halbleiterleuchtelementen (101, 712-707-713, 817-818) mindestens eines Segments ein Pufferkondensator (C3, 714, 819, 724) geschaltet ist, wobei in Reihe zu dem mindestens einen Segment (101, 102) eine Entkoppeldiode (D1, D3, 715, 725, 825) angeordnet ist, und der elektronische Schalter (SW3, 717, 820, 727) parallel zu der Reihenschaltung aus Segment und Entkoppeldiode angeordnet ist, so dass die Entkoppeldiode die Entladung des Pufferkondensators über den elektronischen Schalter verhindert.

17. Schaltung nach einem der vorhergehenden Ansprüche, bei der mindestens einer der Treiber eine Reihenschaltung aus einem Kondensator (734, 744) und einer Diode (735, 745) aufweist, wobei diese Reihenschaltung parallel zu den Halbleiterleuchtelementen (722-708-723, 732-709-733, 742-710-743) des Segments angeordnet ist, das der Treiber ansteuert.

18. Schaltung nach einem der vorhergehenden Ansprüche, bei der der Pufferkondensator über eine lösbare Verbindung austauschbar ausgeführt ist.

19. Schaltung nach einem der vorhergehenden Ansprüche,

- bei der der Treiber einen elektronischen Kurschluss-Schalter (717) umfasst, anhand dessen das dem Treiber zugeordnete Segment kurzschließbar ist,
- wobei der Basis-Anschluss des Kurzschluss-Schalters (717) über ein erstes strombegrenzendes Element (718) mit dem Kollektor-Anschluss eines elektronischen Vergleichs-Schalters (719) verbunden ist,
- wobei der Emitter-Anschluss des Vergleichs-Schalters (719) mit einem Anschluss des Segments, dem der Treiber zugeordnet ist, verbunden ist,
- wobei der Basis-Anschluss des Vergleichs-Schalters (719) mit einem Pol der gleichgerichteten Netzwechselspannung (701) verbunden ist.

**Claims**

1. Circuit for actuating
   semiconductor light-emitting elements,

   - wherein the circuit is supplied by a rectified mains voltage ($U_{703}$),
   - comprising at least two series-connected segments (101, 102, 103), which each have one or more series-connected semiconductor light-emitting elements,
   - wherein the semiconductor light-emitting elements in at least two of the segments are different, which results in different forward voltages of the segments,
   - comprising in each case one driver for actuating a segment, wherein the driver has at least one electronic switch (SW3, 717, 820, 727), by means of which the segment assigned to the driver can be bypassed, **characterized in that** the circuit is designed to decide to bypass the segment assigned to the driver, on the basis of an instantaneous value of the rectified mains voltage ($U_{703}$) and on the basis of the bypass state of the segments adjacent to the driver.

2. Circuit according to Claim 1, wherein the segment with the lower forward voltage is arranged within the series circuit closer to a reference point (302, 503, 704, 805) of the circuit.

3. Circuit according to Claim 1 or 2, wherein each driver has a peak value detector, which stores the present forward voltage of the segment.

4. Circuit according to Claim 3, wherein each driver has a base point, whose potential is dependent on the value of the forward voltage of the segment which is stored in the peak value detector.

5. Circuit according to Claim 4, in which the driver comprises a comparison element (303, 308, 313, 749, 849), as a result of which each driver switches over the segment assigned thereto whenever the potential difference between the base point and a threshold voltage (509, 754) input into the driver changes its mathematical sign.

6. Circuit according to Claim 4 or 5, wherein an individual threshold voltage (401, 402, 403, 852, 853, 854, 855) is assigned to each driver.

7. Circuit according to one of the preceding claims, in which at least two of the segments have semiconductor light-emitting elements, which differ at least partially in terms of their forward voltages, their colors, their sizes, their physical shapes and/or their numbers.

8. Circuit according to one of the preceding claims, in which the forward voltages of all of the segments are different.

9. Circuit according to Claim 8, in which the sums of all possible combinations of the forward voltages of subsets of all segments and the forward voltages of the individual segments always result in different values.

10. Circuit according to Claim 8 or 9, in which the forward voltages ($U_{f1}$, $U_{f2}$, $U_{f3}$) of the series-connected segments (781, 782, 783, 784) double in each case, starting from the segment (781) with the lowest potential, based on the reference point (704).

11. Circuit according to one of the preceding claims, in which a switchover of a segment which has a greater potential difference than the reference point effects a switchover of at least one segment which has a lower potential difference than the reference point.

12. Circuit according to Claim 11, in which bypassing of a segment which has a greater potential difference than the reference point effects safety isolation of the adjacent segment, which has a lower potential difference than the reference point, and vice versa.

13. Circuit according to one of the preceding claims, in which the segments are connected in series with a current regulator (104).

14. Circuit according to Claim 13, in which the current regulator (104) has a resistive element or a linear regulator (508, 752, 811).

15. Circuit according to one of the preceding claims, in which the electronic switch of the driver with the greatest potential difference with respect to the reference point (704) is active with a switching frequency which corresponds to twice the mains frequency, and in which electronic switches of further stages are active at a switching frequency which is a multiple of twice the mains frequency.

16. Circuit according to one of the preceding claims, wherein a buffer capacitor (C3, 714, 819, 724) is connected in parallel with semiconductor light-emitting elements (101, 712-707-713, 817-818) of at least one segment, wherein a decoupling diode (D1, D3, 715, 725, 825) is arranged in series with the at least one segment (101, 102), and the electronic switch (SW3, 717, 820, 727) is arranged in parallel with the series circuit comprising the segment and the decoupling diode, with the result that the decoupling diode prevents the discharge of the buffer capacitor via the electronic switch.

17. Circuit according to one of the preceding claims, in which at least one of the drivers has a series circuit comprising a capacitor (734, 744) and a diode (735, 745), wherein this series circuit is arranged in parallel with the semiconductor light-emitting elements (722-708-723, 732-709-733, 742-710-743) of the segment which is actuated by the driver.

18. Circuit according to one of the preceding claims, in which the buffer capacitor is designed to be replaceable via a detachable connection.

19. Circuit according to one of the preceding claims,

- in which the driver comprises an electronic short-circuiting switch (717), by means of which the segment assigned to the driver can be short-circuited,
- wherein the base connection of the short-circuiting switch (717) is connected to the collector connection of an electronic comparison switch (719) via a first current-limiting element (718),
- wherein the emitter connection of the comparison switch (719) is connected to a connection of the segment, to which the driver is assigned,
- wherein the base connection of the comparison switch (719) is connected to a terminal of the rectified AC mains voltage (701).

## Revendications

1. Circuit de commande d'éléments lumineux à semi-conducteurs,

- ledit circuit étant alimenté par une tension de réseau redressée ($U_{703}$),
- comprenant au moins deux segments (101, 102, 103) montés en série, qui présentent chacun un ou plusieurs éléments lumineux à semi-conducteurs montés en série,
- lesdits éléments lumineux à semi-conducteurs étant différents dans au moins deux des segments, avec pour résultat des tensions directes différentes des segments,
- comprenant respectivement un excitateur pour commander un segment, ledit excitateur présentant au moins un commutateur électronique (SW3, 717, 820, 727) au moyen duquel le segment associé à l'excitateur peut être ponté,

**caractérisé en ce que** le circuit est conçu pour décider sur la base d'une valeur momentanée de la tension de réseau redressée ($U_{703}$), ainsi que sur la base de l'état de pontage des segments au voisinage de l'excitateur, de ponter le segment associé à l'excitateur.

2. Circuit selon la revendication 1, le segment ayant la tension directe plus faible étant disposé, à l'intérieur du couplage en série, plus près d'un point de référence (302, 503, 704, 805) du circuit.

3. Circuit selon la revendication 1 ou 2, chaque excitateur présentant un détecteur de valeur crête qui stocke la tension directe actuelle du segment.

4. Circuit selon la revendication 3, chaque excitateur présentant une base dont le potentiel dépend de la valeur de la tension directe du segment stockée dans le détecteur de valeur crête.

5. Circuit selon la revendication 4, dans lequel l'excitateur comprend un élément comparateur (303, 308, 313, 749, 849) grâce auquel chaque excitateur commute le segment qui lui est associé chaque fois que la différence de potentiel entre la base et une tension de seuil (509, 754) entrée dans l'excitateur change son signe.

6. Circuit selon la revendication 4 ou 5, une tension de seuil individuelle (401, 402, 403, 852, 853, 854, 855) étant associée à chaque excitateur.

7. Circuit selon l'une des revendications précédentes, dans lequel au moins deux des segments présentent des éléments lumineux à semi-conducteurs qui diffèrent au moins partiellement de par leurs tensions directes, leurs couleurs, leurs dimensions, leurs formes de construction et/ou leurs nombres.

8. Circuit selon l'une des revendications précédentes, dans lequel les tensions directes de tous les segments sont différentes.

9. Circuit selon la revendication 8, dans lequel les sommes de toutes les combinaisons possibles des tensions directes de sous-ensembles de tous les segments et les tensions directes des différents segments donnent toujours des valeurs différentes.

10. Circuit selon la revendication 8 ou 9, dans lequel les tensions de flux ($U_{f1}$, $U_{f2}$, $U_{f3}$) des segments (781, 782, 783, 784) montés en série doublent chacune à partir du segment (781) ayant le potentiel le plus faible par rapport au point de référence (704).

11. Circuit selon l'une des revendications précédentes, dans lequel une commutation d'un segment ayant une plus grande différence de potentiel par rapport au point de référence, a pour effet une commutation d'au moins un segment ayant une plus faible différence de potentiel par rapport au point de référence.

12. Circuit selon la revendication 11, dans lequel un pontage d'un segment ayant une plus grande différence de potentiel par rapport au point de référence, a pour effet une déconnexion du segment voisin ayant une plus faible différence de potentiel par rapport au point de référence, et inversement.

13. Circuit selon l'une des revendications précédentes, dans lequel les segments sont montés en série avec un régulateur de courant (104).

14. Circuit selon la revendication 13, dans lequel le régulateur de courant (104) présente un élément résistif ou un régulateur linéaire (508, 752, 811).

15. Circuit selon l'une des revendications précédentes, dans lequel le commutateur électronique de l'excitateur ayant la plus grande différence de potentiel par rapport au point de référence (704) est actif avec une fréquence de commutation correspondant à la double fréquence du réseau, et dans lequel le commutateur électronique d'autres étages est actif avec une fréquence de commutation qui est un multiple de la double fréquence du réseau.

16. Circuit selon l'une des revendications précédentes, un condensateur tampon (C3, 714, 819, 724) étant monté en parallèle à des éléments lumineux à semi-conducteurs (101, 712-707-713, 817-818) d'au moins un segment, une diode de découplage (D1, D3, 715, 725, 825) étant monté en série avec le au moins un segment (101, 102), et le commutateur électronique (SW3, 717, 820, 727) étant monté en parallèle au montage en série composé du segment et la diode de découplage, de sorte que la diode de découplage empêche la décharge du condensateur tampon à travers le commutateur électronique.

17. Circuit selon l'une des revendications précédentes, dans lequel au moins un des excitateurs présente un montage en série composé d'un condensateur (734, 744) et d'une diode (735, 745), ce montage en série étant monté en parallèle aux éléments lumineux à semi-conducteurs (722-708-723, 732-709-733, 742-710-743) du segment que commande l'excitateur.

18. Circuit selon l'une des revendications précédentes, dans lequel le condensateur tampon est réalisé de manière à pouvoir être échangé par le biais d'une liaison amovible.

19. Circuit selon l'une des revendications précédentes,

  - dans lequel l'excitateur comprend un commutateur électronique de court-circuitage (717) au moyen duquel le segment associé à l'excitateur peut être court-circuité,
- la borne de base du commutateur de court-circuitage (717) étant reliée, par l'intermédiaire d'un premier élément limiteur de courant (718), à la borne de collecteur d'un commutateur électronique de comparaison (719),
- la borne d'émetteur du commutateur de comparaison (719) étant reliée à une borne du segment auquel est associé l'excitateur,
- la borne de base du commutateur de comparaison (719) étant reliée à un pôle de la tension alternative de réseau (701) redressé.

# Fig. 1

Fig. 2

Fig. 3

Fig. 4

Fig. 5

Fig. 6

Fig. 7

Fig. 8

Fig. 9a

Fig. 9b

Fig. 10a

Fig. 10b

Fig. 10c

Fig. 10d

Fig. 10e

Fig. 10f

Fig. 10g

Fig. 10h

Fig. 10i

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010040266 A1

- WO 2012034102 A1